(19) Europäisches Patentamt
European Patent Office
Office européen des brevets

(11) **EP 4 611 273 A1**

(12) **EUROPEAN PATENT APPLICATION**
published in accordance with Art. 153(4) EPC

(43) Date of publication:
**03.09.2025 Bulletin 2025/36**

(21) Application number: **22963104.9**

(22) Date of filing: **27.10.2022**

(51) International Patent Classification (IPC):
**H04B 7/0417** (2017.01)     **H04B 7/0456** (2017.01)

(52) Cooperative Patent Classification (CPC):
**H04B 7/0417; H04B 7/0456**

(86) International application number:
**PCT/CN2022/128063**

(87) International publication number:
**WO 2024/087120 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **HUANG, Yingpei
  Dongguan, Guangdong 523860 (CN)**
• **CHEN, Wenhong
  Dongguan, Guangdong 523860 (CN)**
• **SHI, Zhihua
  Dongguan, Guangdong 523860 (CN)**

(74) Representative: **RGTH
Patentanwälte PartGmbB
Neuer Wall 10
20354 Hamburg (DE)**

(54) **WIRELESS COMMUNICATION METHODS, TERMINAL DEVICES AND NETWORK DEVICES**

(57)    Wireless communication methods, terminal devices and network devices. A wireless communication method comprises: a terminal device reporting a target codebook to a network device, wherein the target codebook is represented by means of a spatial basis vector, a frequency-domain basis vector, a time-domain basis vector, and weighting coefficients corresponding to the spatial basis vector, the frequency-domain basis vector and the time-domain basis vector; and the time-domain basis vector is a vector with the length of N4, and the vector with the length of N4 corresponds to N4 first time units.

```
┌──────────────────┐                          ┌──────────────────┐
│ Terminal device  │                          │  Network device  │
└──────────────────┘                          └──────────────────┘
         │                                              │
         │  S210. A target codebook, where the          │
         │  target codebook is represented by using     │
         │  a spatial domain basis vector, a            │
         │  frequency domain basis vector, a time       │
         │  domain basis vector, and weighting          │
         │  coefficients corresponding to the spatial   │
         │  domain basis vector, the frequency          │
         │  domain basis vector, and the time domain    │
         │  basis vector, the time domain basis         │
         │  vector is a vector whose length is $N_4$,   │
         │  and the vector whose length is $N_4$        │
         │  corresponds to $N_4$ first time units       │
         │ ──────────────────────────────────────────▶ │
         │                                              │
```

FIG. 3

## Description

## TECHNICAL FIELD

Embodiments of this application relate to the communication field, and more specifically, to a wireless communication method, a terminal device, and a network device.

## BACKGROUND

In a new radio (New Radio, NR) system, a terminal device may report a precoding matrix indicator (Precoding Matrix Indicator, PMI) to a network device. Further, the network device may perform downlink transmission by using a codebook corresponding to the PMI. Therefore, how to report a codebook to improve downlink transmission performance is an urgent problem to be resolved.

## SUMMARY

This application provides a wireless communication method, a terminal device, and a network device, to improve downlink transmission performance.

According to a first aspect, a wireless communication method is provided, and the method includes: reporting, by a terminal device, a target codebook to a network device, where the target codebook is represented by using a spatial domain basis vector, a frequency domain basis vector, a time domain basis vector, and weighting coefficients corresponding to the spatial domain basis vector, the frequency domain basis vector, and the time domain basis vector, the time domain basis vector is a vector whose length is $N_4$, and the vector whose length is $N_4$ corresponds to $N_4$ first time units.

According to a second aspect, a wireless communication method is provided, and the method includes: receiving, by a network device, a target codebook reported by a terminal device, where the target codebook is represented by using a spatial domain basis vector, a frequency domain basis vector, a time domain basis vector, and weighting coefficients corresponding to the spatial domain basis vector, the frequency domain basis vector, and the time domain basis vector, the time domain basis vector is a vector whose length is $N_4$, and the vector whose length is $N_4$ corresponds to $N_4$ first time units.

According to a third aspect, a terminal device is provided, and the terminal device is configured to execute the method according to the first aspect or implementations of the first aspect.

Specifically, the terminal device includes a functional module configured to execute the method according to the first aspect or implementations of the first aspect.

According to a fourth aspect, a network device is provided, and the network device is configured to execute the method according to the second aspect or implementations of the second aspect.

Specifically, the network device includes a functional module configured to execute the method according to the second aspect or implementations of the second aspect.

According to a fifth aspect, a terminal device is provided, and the terminal device includes a processor and a memory. The memory is configured to store a computer program, and the processor is configured to invoke and run the computer program stored in the memory to execute the method according to the first aspect or implementations of the first aspect.

According to a sixth aspect, a network device is provided, and the network device includes a processor and a memory. The memory is configured to store a computer program, and the processor is configured to invoke and run the computer program stored in the memory, to execute the method according to the second aspect or implementations of the second aspect.

According to a seventh aspect, a chip is provided, and the chip is configured to implement the method according to any one of the first aspect and the second aspect or implementations of the first aspect and the second aspect.

Specifically, the chip includes a processor, configured to invoke a computer program from a memory and run the computer program, to cause a device installed with the apparatus to execute the method according to any one of the first aspect and the second aspect or implementations of the first aspect and the second aspect.

According to an eighth aspect, a computer-readable storage medium is provided and configured to store a computer program, where the computer program causes a computer to execute the method according to any one of the first aspect and the second aspect or implementations of the first aspect and the second aspect.

According to a ninth aspect, a computer program product is provided, including computer program instructions, where the computer program instructions cause a computer to execute the method according to any one of the first aspect and the second aspect or implementations of the first aspect and the second aspect.

According to a tenth aspect, a computer program is provided, and when the computer program runs on a computer, the computer executes the method according to any one of the first aspect and the second aspect or implementations of the first aspect and the second aspect.

According to the foregoing technical solution, a terminal device may report a target codebook to a network device. The target codebook may include a time domain basis vector. The time domain basis vector corresponds to $N_4$ first time units, that is, the target codebook reported by the terminal device may reflect a time-varying characteristic of a channel in a period of time. Therefore, the network device performs downlink transmission based on the target codebook, which facilitates improving transmission performance.

**BRIEF DESCRIPTION OF DRAWINGS**

FIG. 1 is a schematic diagram of an architecture of a communications system according to an embodiment of this application.

FIG. 2 is a schematic diagram of PMI feedback in the related art.

FIG. 3 is a schematic interaction diagram of a wireless communication method according to an embodiment of this application.

FIG. 4 is a schematic diagram of $N_4$ first time units according to an embodiment of this application.

FIG. 5 is a schematic diagram of another $N_4$ first time units according to an embodiment of this application.

FIG. 6 is a schematic block diagram of a terminal device according to an embodiment of this application.

FIG. 7 is a schematic block diagram of a network device according to an embodiment of this application.

FIG. 8 is a schematic block diagram of a communications device according to an embodiment of this application.

FIG. 9 is a schematic block diagram of a chip according to an embodiment of this application.

FIG. 10 is a schematic block diagram of a communications system according to an embodiment of this application.

**DESCRIPTION OF EMBODIMENTS**

The following describes the technical solutions in embodiments of this application with reference to the accompanying drawings in embodiments of this application. Apparently, the described embodiments are some rather than all of embodiments of this application. All other embodiments obtained by a person of ordinary skill in the art based on embodiments of this application without creative efforts shall fall within the protection scope of this application.

The technical solutions in embodiments of this application may be applied to various communications systems, such as a global system for mobile communications (Global System of Mobile communication, GSM) system, a code-division multiple access (Code Division Multiple Access, CDMA) system, a wideband code-division multiple access (Wideband Code Division Multiple Access, WCDMA) system, a general packet radio service (General Packet Radio Service, GPRS) system, a long term evolution (Long Term Evolution, LTE) system, an advanced long term evolution (Advanced long term evolution, LTE-A) system, a new radio (New Radio, NR) system, an evolved NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial networks (Non-Terrestrial Networks, NTN) system, a universal mobile telecommunication system (Universal Mobile Telecommunication System, UMTS), wireless local area networks (Wireless Local Area Networks, WLAN), wireless fidelity (Wireless Fidelity, WiFi), a fifth generation communications (5th-Generation, 5G) system, or another communications system.

Generally, a quantity of connections supported by a conventional communications system is limited, and is easy to implement. However, with the development of communication technologies, a mobile communications system not only supports conventional communications, but also supports, for example, device to device (Device to Device, D2D) communication, machine to machine (Machine to Machine, M2M) communication, machine type communication (Machine Type Communication, MTC), vehicle to vehicle (Vehicle to Vehicle, V2V) communication, or vehicle to everything (Vehicle to every thing, V2X) communication, and the like. Embodiments of this application may also be applied to these communications systems.

Optionally, a communications system in embodiments of this application may be applied to a carrier aggregation (Carrier Aggregation, CA) scenario, a dual connectivity (Dual Connectivity, DC) scenario, or a standalone (Standalone, SA) networking scenario.

Optionally, a communications system in embodiments of this application may be applied to an unlicensed spectrum, and the unlicensed spectrum may also be considered as a shared spectrum. Alternatively, a communications system in embodiments of this application may be applied to a licensed spectrum, and the licensed spectrum may also be considered as a non-shared spectrum.

Embodiments of this application are described with reference to a network device and a terminal device. The terminal device may also be referred to as a user equipment (User Equipment, UE), an access terminal, a user unit, a user station, a mobile site, a mobile station, a remote station, a remote terminal, a mobile device, a user terminal, a terminal, a wireless communications device, a user agent, a user apparatus, or the like.

The terminal device may be a station (STATION, ST) in a WLAN, may be a cellular phone, a cordless phone, a session initiation system (Session Initiation Protocol, SIP) phone, a wireless local loop (Wireless Local Loop, WLL) station, a personal digital assistant (Personal Digital Assistant, PDA) device, a handheld device with a wireless communication function, a computing device or another processing device connected to a wireless modem, a vehicle-mounted device, a wearable device, a terminal device in a next-generation communications system such as an NR network, or a terminal device in a future evolved public land mobile network (Public Land Mobile Network, PLMN), or the like.

In embodiments of this application, the terminal device may be deployed on land, including being indoors or outdoors, may be handheld, wearable, or vehicle-mounted. The terminal device may be deployed on water (for example, on a ship), or may be deployed in the air (for example, on an airplane, an air balloon, or a satellite).

In embodiments of this application, the terminal device may be a mobile phone (Mobile Phone), a tablet computer (Pad), a computer with a wireless transceiver function, a virtual reality (Virtual Reality, VR) terminal device, an augmented reality (Augmented Reality, AR) terminal device, a wireless terminal device in industrial control (industrial control), a wireless terminal device in self-driving (self-driving), a wireless terminal device in remote medical (remote medical), a wireless terminal device in smart grid (smart grid), a wireless terminal device in transportation safety (transportation safety), a wireless terminal device in smart city (smart city), or a wireless terminal device in smart home (smart home), or the like.

By way of example rather than limitation, in embodiments of this application, the terminal device may alternatively be a wearable device. The wearable device may also be referred to as an intelligent wearable device, and is a general term for wearable devices such as glasses, gloves, watches, clothes, and shoes that are intelligently designed and developed based on daily wearing by using a wearable technology. The wearable device is a portable device that can be directly worn or integrated into clothes or accessories of a user. In addition to being a hardware device, the wearable device can also realize various functions through software support, data interaction, and cloud interaction. In a broad sense, wearable smart devices may include a full-featured and large-sized device that can provide full or partial functions without relying on a smart phone, for example, a smart watch or smart glasses, and devices that focus on only a specific type of application function and are required to cooperate with another device such as a smart phone for use, for example, various smart bracelets and smart jewelries for physical sign monitoring.

In embodiments of this application, the network device may be a device configured to communicate with a mobile device. The network device may be an access point (Access Point, AP) in a WLAN, a base transceiver station (Base Transceiver Station, BTS) in GSM or CDMA, a Node B (NodeB, NB) in WCDMA, an evolved Node B (Evolutional Node B, eNB, or eNodeB) in LTE, a relay station or an access point, a vehicle-mounted device, a wearable device, a network device (gNB) in an NR network, a network device in a future evolved PLMN network, a network device in an NTN network, or the like.

By way of example rather than limitation, in embodiments of this application, the network device may have a mobility characteristic. For example, the network device may be a mobile device. Optionally, the network device may be a satellite or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, a high elliptical orbit (High Elliptical Orbit, HEO) satellite, or the like. Optionally, the network device may alternatively be a base station disposed in a location such as land or water.

In embodiments of this application, the network device may provide a service for a cell, and the terminal device communicates with the network device by using a transmission resource (for example, a frequency domain resource or a spectrum resource) used by the cell. The cell may be a cell corresponding to the network device (for example, a base station). The cell may belong to a macro base station or belong to a base station corresponding to a small cell (Small cell). The small cell herein may include: a metro cell (Metro cell), a micro cell (Micro cell), a pico cell (Pico cell), a femto cell (Femto cell), or the like. These small cells have a characteristic of a small coverage range and low transmit power, and are suitable for providing a high-speed data transmission service.

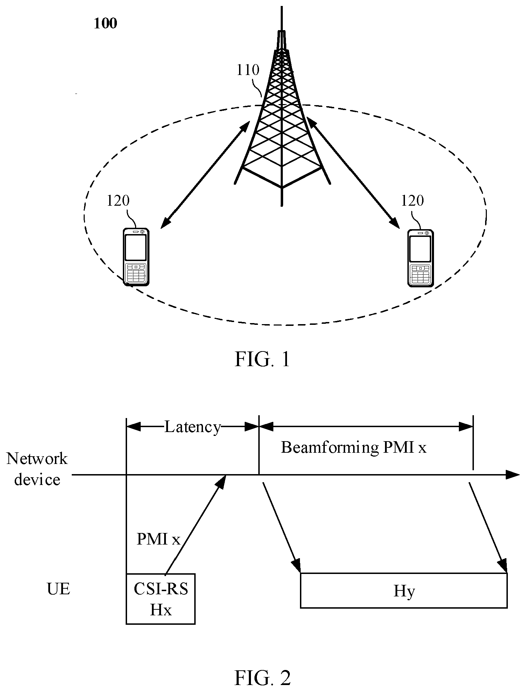

For example, a communications system 100 to which embodiments of this application are applied is shown in FIG. 1. The communications system 100 may include a network device 110, and the network device 110 may be a device that communicates with a terminal device 120 (or referred to as a communications terminal or a terminal). The network device 110 may provide communication coverage for a specific geographic area, and may communicate with a terminal device located in the coverage area.

FIG. 1 exemplarily shows one network device and two terminal devices. Optionally, the communications system 100 may include a plurality of network devices, and another quantity of terminal devices may be included in the coverage range of each network device, which is not limited in embodiments of this application.

Optionally, the communications system 100 may further include another network entity such as a network controller or a mobility management entity. This is not limited in embodiments of this application.

It should be understood that in embodiments of this application, a device having a communication function in a network or a system may be referred to as a communications device. The communications system 100 shown in FIG. 1 is used as an example. The communications device may include the network device 110 and the terminal device 120 that have a communication function. The network device 110 and the terminal device 120 may be specific devices described above, and details are not described herein again. The communications device may further include another device in the communications system 100, for example, another network entity such as a network controller or a mobility management entity, which is not limited in embodiments of this application.

It should be understood that the terms "system" and "network" may often be used interchangeably in this specification. In this specification, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

It should be understood that, in embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In descriptions of embodiments of this application, the term "corresponding" may mean that there is a direct or indirect correspondence between two elements, or that there is an association relationship between two elements, or that there is a relationship of "indicating" and "being indicated", "configuring" and "being configured", or the like.

In embodiments of this application, the "predefining" may be implemented by prestoring corresponding code, tables, or other forms that may be used to indicate related information in devices (for example, including a terminal device and a network device), and a specific implementation thereof is not limited in this application. For example, being predefined may refer to being defined in a protocol.

In embodiments of this application, the "protocol" may indicate a standard protocol in the communication field, which may include, for example, an LTE protocol, an NR protocol, and a related protocol applied to a future communications system. This is not limited in this application.

To facilitate understanding of the technical solutions in embodiments of this application, the following describes the technical solutions in this application in detail by using specific embodiments. The following related technologies, as optional solutions, may be randomly combined with the technical solutions of embodiments of this application, all of which fall within the protection scope of embodiments of this application. Embodiments of this application include at least part of the following content.

To facilitate understanding of the technical solutions in embodiments of this application, the following describes related concepts of a frequency-spatial domain codebook.

In a related technology, for each layer of codebook, a frequency-spatial domain codebook (which may also be referred to as an NR type (type) II codebook or a frequency-spatial domain joint codebook) is independently encoded in frequency domain (per subband). Because of high spatial quantization precision, a total amount of feedback is too large. A feedback amount may be greatly reduced under a condition of ensuring NR performance by feeding back the frequency-spatial domain joint codebook.

The frequency-spatial domain codebook may be represented as follows:

$$W = W_1 \widehat{W}_2 W_f^H$$

where W denotes a frequency-spatial domain codebook, $W_1$ denotes a discrete Fourier transformation (Discrete fourier transformation, DFT) vector of 2L spatial beams (beam), and $W_f$ denotes a DFT basis vector of M frequency domains.

$W_f^H$ denotes transpose of $W_f$, $\widehat{W}_2$ denotes a weighting coefficient of a pair of spatial-frequency DFT vectors, and $W_1$ is a matrix whose size is $2N_1N_2 * 2L$. $N_1$ is a quantity of ports in a vertical direction, and $N_2$ is a quantity of ports in a horizontal direction. $\widehat{W}_2$ is a matrix of $2L*M$, a value of 2L is a quantity of rows of $\widehat{W}_2$, and a value of M is a quantity of columns of $\widehat{W}_2$.

$W_f^H$ is a matrix of $M*N_3$, and $N_3$ is a quantity of DFT basis vectors in frequency domain.

When a terminal device feeds back the frequency-spatial domain codebook to a network device, content reported to the network device includes:

a DFT vector of L spatial beams of $W_1$, a DFT basis vector of M frequency domains of $W_f$, and quantized $\widehat{W}_2$. The network device obtains channel state information (Channel State Information, CSI) of each layer of downlink according to a product of the three parameters.

In some scenarios, as shown in FIG. 2, the network device may transmit a CSI-RS at an instant x. A UE determines, by using the CSI-RS, that channel information at the instant x which is denoted as Hx, further calculates, based on the channel information, a corresponding precoding matrix indicator (Precoding Matrix Indicator, PMI), which is denoted as PMIx, and reports the PMIx to the network device. The network device transmits a physical downlink shared channel (Physical Downlink Shared Channel, PDSCH) by using the PMIx, and an instant at which the PDSCH is transmitted is an instant y, and channel information at this time is Hy. Due to channel time-varying, the PMIx cannot well reflect a channel state of the Hy, which affects downlink transmission performance.

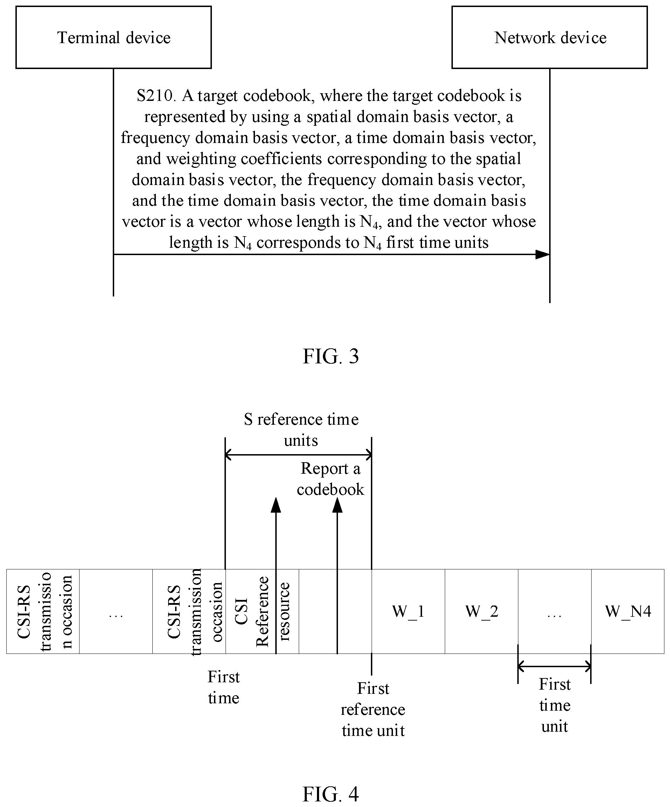

FIG. 3 is a schematic interaction diagram of a wireless communication method 200 according to an embodiment of this application. As shown in FIG. 3, the method 200 includes the following content.

S210. A terminal device reports a target codebook to a network device, where the target codebook is represented by using a spatial domain basis vector, a frequency domain basis vector, a time domain basis vector, and weighting coefficients corresponding to the spatial domain basis vector, the frequency domain basis vector, and the time domain basis vector, the time domain basis vector is a vector whose length is $N_4$, the vector whose length is $N_4$ corresponds to $N_4$ first time units, and $N_4$ is a positive integer.

In some embodiments, the time domain basis vector (or referred to as Doppler basis vector) is a discrete Fourier transform (Discrete Fourier Transform, DFT) vector or a discrete cosine transform (Discrete Cosine Transform, DCT) vector.

In a related technology, $N_1$ denotes a quantity of ports in a vertical direction, $N_2$ denotes a quantity of ports in a horizontal direction, and $N_3$ denotes a total quantity of frequency domain basis vectors in frequency domain. Therefore, in embodiments of this application, a total quantity of time domain basis vectors in time domain is denoted by $N_4$, or may be denoted by another symbol, which is not limited in this application.

In some embodiments, a target codebook W may be represented by using the following formula:

$$W = \begin{bmatrix} \sum_{k=0}^{D-1} \sum_{i=0}^{L-1} \sum_{j=0}^{M_v-1} c_{i,j,k} v_i \left( f_j^H \otimes d_k \right) \\ \sum_{k=0}^{D-1} \sum_{i=0}^{L-1} \sum_{j=0}^{M_v-1} c_{i+L,j,k} v_i \left( f_j^H \otimes d_k \right) \end{bmatrix},$$

where $\Sigma$ denotes a sum operation, $c_{i,j,k}$ denotes a weighting coefficient, $v_i$ denotes a spatial domain basis vector, $f_j^H$ denotes a frequency domain basis vector, $d_k$ denotes a time domain basis vector, D denotes a quantity of time domain basis vectors reported by the terminal device, L denotes a quantity of reported spatial domain basis vectors, $M_v$ denotes a quantity of reported frequency domain basis vectors, and $\otimes$ denotes a Kronecker product.

It should be understood that expressions of the spatial domain basis vector, the frequency domain basis vector, and the time domain basis vector are not limited in this application. For example, the frequency domain basis vector may alternatively be denoted by $n_{3,l}^{(f)}$, and the time domain basis vector may alternatively be denoted by $n_{4,l}^{(d)}$. For details, reference may be made to the following embodiments. Details are not described herein.

In some embodiments of this application, S210 may include:
reporting, by the terminal device, a PMI to the network device, where the PMI is used for indicating a target codebook (or a target precoding matrix).

In some embodiments, the target codebook includes $N_4$ groups of precoding matrices, where each group of precoding matrices corresponds to one first time unit. Each group of precoding matrices includes $N_3$ frequency domain basis vectors, and $N_3$ is a total quantity of the frequency domain basis vectors in frequency domain.

In some embodiments, the target codebook includes a time domain basis vector, and the time domain basis vector corresponds to $N_4$ first time units. Therefore, the time domain basis vector may reflect a characteristic of channel information in time domain. Therefore, according to the codebook reporting manner in embodiments of this application, it is beneficial for ensuring that the network device selects a proper precoding matrix for downlink transmission, thereby ensuring downlink transmission performance.

In some embodiments, the terminal device may receive a CSI-RS at one or more CSI-RS transmission occasions, and determine a precoding matrix of future $N_4$ first time units by measuring the CSI-RS, so as to further report a codebook.

In other words, the terminal device may estimate a precoding matrix after a period of time by using a CSI-RS received before the codebook is reported, and further report the precoding matrix. Therefore, the reported precoding matrix may reflect channel information after a period of time. In this way, the network device performs downlink transmission based on the reported precoding matrix, which facilitates ensuring downlink transmission performance.

In some embodiments, the $N_4$ is predefined, for example, is agreed upon by a protocol.

In a specific example, $N_4$ may be a fixed value, for example, $N_4 = 2$.

In some other embodiments, the $N_4$ is configured by the network device, for example, is determined based on a higher layer parameter.

In still some other embodiments, the $N_4$ may be determined by the terminal device.

In some embodiments, the method 200 further includes:
reporting, by the terminal device, the $N_4$ to the network device.

Optionally, the terminal device may report the $N_4$ in part 1 (Part 1) of uplink control information (Uplink Control Information, UCI).

In some embodiments, the $N_4$ is selected by the terminal device from K candidate values, where K is a positive integer.

Optionally, the $N_4$ is reported by using $\lceil log_2 K \rceil$ bits, where $\lceil \ \rceil$ denotes a ceiling operation. That is, a bit width used for reporting the N4 is $\lceil log_2 K \rceil$.

Optionally, the K candidate values may be predefined, for example, may be agreed upon by a protocol, or may be configured by a network device.

In another embodiment, the $N_4$ is selected by the terminal device from a first value range.

Optionally, the first value range may be predefined, for example, may be agreed upon by a protocol, or may be configured by the network device, for example, may be determined based on a higher layer parameter.

Optionally, a maximum value of the first value range is predefined, or is determined based on a higher layer parameter.

Optionally, a minimum value of the first value range is predefined, or is determined based on a higher layer parameter.

In some embodiments, the $N_4$ is reported by using $\lceil log_2(N_{4,max} - N_{4,min} + 1) \rceil$ bits, where $N_{4,max}$ denotes a maximum value of the first value range, and $N_{4,min}$ denotes a minimum value of the first value range. That is, a bit width used for reporting the $N_4$ is $\lceil log_2(N_{4,max} - N_{4,min} + 1) \rceil$.

In some embodiments, a length of the first time unit is predefined, for example, is agreed upon by a protocol, or configured by the network device, for example, is determined based on a higher layer parameter.

In some embodiments, the length of the first time unit is T slots, where T is a positive integer.

Optionally, the T slots are consecutive in time domain.

In some embodiments, the T is predefined or configured by the network device, for example, is determined based on a higher layer parameter.

For example, the T is a fixed value, for example, the T is one or more values in 2, 4, 5.

For example, the T is determined based on a higher layer parameter, for example, the T is one or more values in {2,4}, where {2,4} is configured by using a higher layer parameter.

In some embodiments, the T is determined based on a subcarrier spacing and a higher layer parameter.

Optionally, the T is determined based on a subcarrier spacing and a nominal parameter, where the nominal parameter is determined based on a higher layer parameter.

For example, for a subcarrier spacing $\mu$, $T = 2^{\mu}*b$ slots, where b is determined based on a higher layer parameter, and optionally, b = 4.

In some embodiments, the T is determined based on a bandwidth part (Band Width Part, BWP) and a higher layer parameter.

Optionally, the network device may configure a correspondence between a BWP (for example, a quantity of physical resource blocks (physical resource block, PRB)) and a time length T. The correspondence may include values of time lengths respectively corresponding to a plurality of BWPs. For example, the correspondence may be shown in Table 1. In this case, the terminal device may determine a target time length T according to a currently activated BWP and the correspondence. For example, if the currently activated BWP is 24 PRBs, the terminal device may determine that the time length T is 4 or 8 slots.

Table 1

| BWP (PRB) | Time length T (slot) |
| --- | --- |
| 24 to 72 | 4, 8 |
| 73 to 144 | 8, 16 |
| 145 to 275 | 16, 32 |

In some embodiments, the T is determined based on a subband size (Subband Size) and a higher layer parameter.

Optionally, the network device may configure a correspondence between a subband size and a time length T. The correspondence may include values of time lengths corresponding to a plurality of subband sizes. For example, the correspondence may be shown in Table 2. In this case, the terminal device may determine a target time length T according to a subband size of a currently activated BWP and the correspondence. For example, if the subband size of the currently activated BWP is 4 or 8, the terminal device may determine that the time length T is 4 or 8 slots.

Table 2

| Subband size (PRB) | Time length T (slot) |
|---|---|
| 4, 8 | 4, 8 |
| 8, 16 | 8, 16 |
| 16, 32 | 16, 32 |

In some embodiments, the first time unit corresponds to one or more CSI-RS transmission occasions of a channel state information reference signal (Channel State Information Reference Signal, CSI-RS) resource, and a CSI-RS is transmitted in one or more of periodic, quasi periodic, or aperiodic.

For example, the length of the first time unit may be a length of one CSI-RS transmission occasion, or may be a length of a plurality of CSI-RS transmission occasions.

In some embodiments, the length of the first time unit is determined based on a reference time length, and the reference time length is a period of a configured CSI-RS resource or an offset between a plurality of CSI-RS resources.

In some embodiments, a minimum value of the length of the first time unit is the reference time length.

In some embodiments, the length of the first time unit is determined based on the reference time length and a higher layer parameter.

Optionally, the terminal device may determine a time length by using a higher layer parameter R, that is, T = R*d, where d is a period of a configured CSI-RS resource or an offset between a plurality of CSI-RS resources. Optionally, R is one or more values in {1,2}, where {1,2} is configured by using a higher layer parameter.

In some other embodiments, the length T of the first time unit is determined by the terminal device.

In some embodiments, the method 200 further includes:

reporting, by the terminal device, a length X of the first time unit to the network device, where X is a positive integer.

Optionally, a time unit of X may be a slot.

In some embodiments, the X is selected from a plurality of candidate values.

Optionally, the plurality of candidate values may be predefined, for example, may be agreed upon by a protocol, or may be configured by the network device.

In some embodiments, the X is greater than or equal to a candidate value of a period of a CSI-RS associated with the target codebook.

For example, an optional value range of T is {2, 4, 8, 16}. Assuming d = 4, a value of a time length T reported by a UE is selected from {4, 8, 16}, and d is a period of a configured CSI-RS resource or an offset between a plurality of CSI-RS resources.

In some embodiments of this application, the method 200 further includes:

reporting, by the terminal device to a network device, a channel quality indicator (Channel Quantity Indicator, CQI) corresponding to the target codebook. That is, the terminal device may further report, to the network device, a CQI corresponding to a PMI.

In some embodiments, $N_4$ first time units (or referred to as PMI time units) correspond to Y second time units (or referred to as CQI time units), where the second time unit is a time unit of the CQI, and Y is a positive integer.

In some embodiments, consecutive Q first time units correspond to one second time unit, where Q is a positive integer.

That is, consecutive Q PMI time units correspond to one CQI time unit.

In some embodiments, Q is predefined or determined based on a higher layer parameter.

In an example, Q is a fixed value, for example, Q is 1.

In some embodiments, the method 200 further includes:

reporting, by the terminal device, a quantity Y of the second time units to the network device.

That is, the terminal device may report a quantity Y of CQI time units to the network device. Further, the network device may determine a quantity of CQI time units in time domain.

In some embodiments, CQIs corresponding to respective time units for each subband are obtained by using wideband CQI differential.

For example, offsets of respective time units for each subband are obtained by subtracting a wideband CQI index from CQI indexes of respective time units for each subband.

Optionally, a mapping relationship between a subband differential CQI and an offset level (Offset level) may be shown in Table 3.

Table 3

| Subband differential CQI value | Offset level |
| --- | --- |
| 0 | 0 |
| 1 | 1 |
| 2 | $\geq 2$ |
| 3 | $\leq -1$ |

In some embodiments of this application, the $N_4$ first time units correspond to $N_4$ first time units located after a first reference time unit, and the first reference time unit is located after a first time unit and spaced by S reference time units.

In some embodiments, a time length of the reference time unit is the same as a time length of the first time unit. That is, the first reference time unit is located after the first time and spaced by S reference time units.

In some other embodiments, the time length of the reference time unit is a length of a slot. That is, the first reference time unit is located after the first time and is spaced by S slots.

In some embodiments, the first time is a CSI-RS transmission occasion closest to a CSI reference resource. For example, the first time is a CSI-RS transmission occasion located before the CSI reference resource and closest to the CSI reference resource.

As shown in FIG. 4, the first time is a CSI-RS transmission occasion closest to a CSI reference resource. The first reference time unit is located after the first time and spaced by S reference time units. In this case, $N_4$ groups of precoding matrices in the target codebook correspond to $N_4$ first time units located after the first reference time unit, and each group of precoding matrices corresponds to one of the first time units.

In some embodiments, the CSI reference resource is one time-frequency resource. The CSI reference resource corresponds to one slot in time domain and a granularity of CSI measurement in frequency domain. For example, when CSI is measured in a subband, the CSI reference resource corresponds to a size of the subband in frequency domain. On the contrary, when CSI is measured in wideband, the CSI reference resource corresponds to a size of the wideband in frequency domain.

In some embodiments, the first time is a time at which the terminal device reports the target codebook.

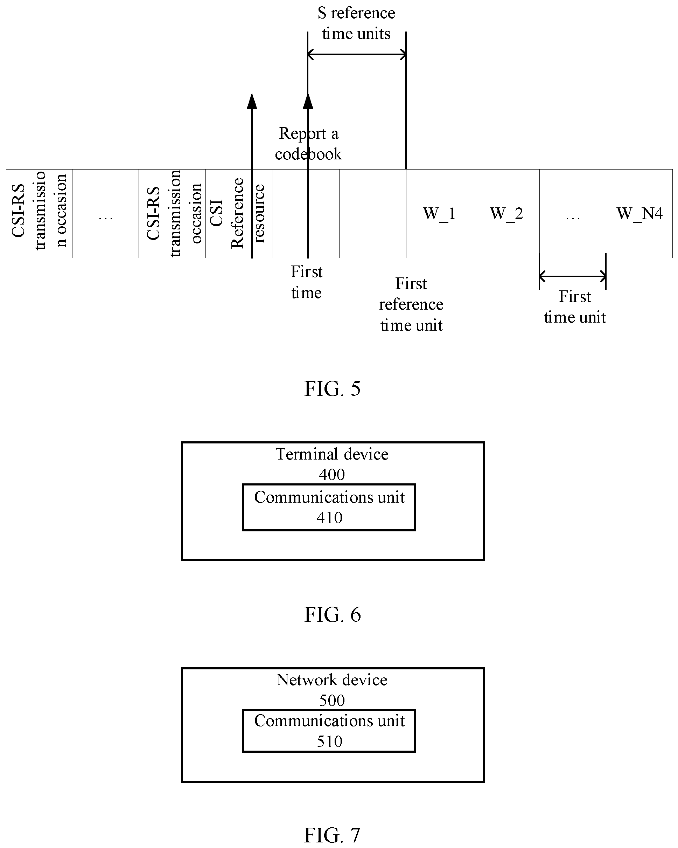

As shown in FIG. 5, the first time is a time at which the terminal device reports the target codebook. The first reference time unit is located after the first time and spaced by S reference time units. In this case, $N_4$ groups of precoding matrices in the target codebook correspond to $N_4$ first time units located after the first reference time unit, and each group of precoding matrices corresponds to one of the first time units.

In some embodiments, the S is predefined, for example, is agreed upon by a protocol.

In some other embodiments, the network device is configured, for example, is determined based on a higher layer parameter configured by the network device.

In still some other embodiments, the S may be determined by the terminal device.

In some embodiments, the method 200 further includes:
reporting, by the terminal device, a quantity S of the reference time units to the network device.

In embodiments of this application, the terminal device may periodically report the target codebook, or quasi-periodically report the target codebook, or aperiodically report the target codebook.

With reference to a manner in which the terminal device reports the target codebook, the following describes a size of a time domain resource occupied by the terminal device to report the target codebook, and a size of a processing resource occupied by the terminal device to report the target codebook.

In some embodiments, the terminal device periodically or quasi-periodically reports the target codebook, where the terminal device occupies a CSI processing unit (CSI processing uint) in a first time period.

Optionally, the first time period may include a time period occupied when the terminal device determines the target codebook and reports the target codebook. For example, the first time period may include a time period occupied when the terminal device receives a CSI-RS, performs measurement on the CSI-RS to determine the target codebook, and reports the target codebook.

In a specific embodiment, a start time of the first time period is the first CSI-RS transmission occasion of most recent N consecutive CSI-RS transmission occasions that are located before a CSI reference resource, where N is a positive integer. For example, the start time of the first time period may be a start instant of the first CSI-RS transmission occasion, or an end instant of the first CSI-RS transmission occasion, or an intermediate instant of the first CSI-RS transmission occasion.

Optionally, the N is a predefined parameter, for example, a parameter agreed upon by a protocol, or a parameter configured by the network device.

In another specific embodiment, the start time of the first time period may be the first slot of the most recent Y consecutive slots that are located before the CSI reference resource, where Y is a positive integer. For example, the start time of the first time period may be a start instant of the first slot, or an end instant of the first slot, or an intermediate instant of the first slot.

Optionally, the Y is a predefined parameter, for example, a parameter agreed upon by a protocol, or a parameter configured by the network device.

In a specific embodiment, an end time of the first time period is a last symbol of a physical uplink channel that carries the target codebook.

Optionally, the target codebook may be carried by a physical uplink shared channel (Physical Uplink Shared Channel, PUSCH) and/or a physical uplink control channel (Physical Uplink Control Channel, PUCCH).

In some embodiments, the terminal device aperiodically reports the target codebook, where the terminal device occupies a CSI processing unit (CSI processing uint) in a second time period.

Optionally, the second time period may include a time period occupied when the terminal device determines that the target codebook is required to be reported and reports the target codebook. For example, the second time period may include a time period occupied when the terminal device receives DCI for triggering reporting of the target codebook, performs measurement on a CSI-RS to determine the target codebook, and reports the target codebook.

In some embodiments, the second time period starts with DCI for triggering reporting of the target codebook and ends with the last symbol of a physical uplink channel that carries the target codebook.

In some embodiments, for a terminal device to report a target codebook, the terminal device occupies M CSI processing units.

In some implementations, M is a quantity of most recent consecutive CSI-RS transmission occasions located before a CSI reference resource.

That is, for reporting of the target codebook, the terminal device may occupy the most recent M consecutive CSI-RS transmission occasions located before the CSI reference resource.

Optionally, the M is predefined or configured by the network device, for example, is determined based on a higher layer parameter.

In some other implementations, the M is a quantity of CSI-RS transmission occasions included in a third time period, and the third time period starts with DCI for triggering reporting of the target codebook and ends with the CSI reference resource. For example, a start time of the third time period may be a receive time of the DCI, and an end time of the third time period may be an end time of the CSI reference resource.

That is, a quantity of CSI-RS transmission occasions included in a time period from DCI for triggering reporting of the target codebook to the CSI reference resource is the same as a quantity of CSI processing units occupied by the terminal device.

In still some other implementations, the M is $N_4$, namely, a quantity of precoding matrices associated with the target codebook in time domain.

That is, a quantity of precoding matrices reported by the terminal device is the same as a quantity of CSI processing units occupied by the terminal device.

In some embodiments, the terminal device may further determine a priority of information in the target codebook, that is, a sequence of information in the target codebook. For example, the terminal device determines priorities of an amplitude and a phase of weighting coefficients, a priority of a bitmap corresponding to weighting coefficients, or the like. Prioritizing information in the target codebook is beneficial to ensuring that the terminal device preferentially reports high-priority information, thereby ensuring accuracy of the codebook. For example, in a case of reducing CSI overheads by reporting part of CSI (that is, part of CSI is to be discarded), the terminal device may select, based on priority ranking of non-zero coefficients in weighting coefficients, a non-zero coefficient to be preferentially reported, which can reduce impact on accuracy of a codebook caused reporting of part of CSI, so that both codebook overheads and codebook accuracy are considered.

In some embodiments of this application, priorities of an amplitude and a phase of the weighting coefficients are determined based on at least one of the following:

$L, l, i, f, v, N_3, M_v, d, n_{3,l}^{(f)}, n_{4,l}^{(d)}, N_4$, or D,

where $L$ denotes a quantity of spatial domain basis vectors included in a reported target codebook, $l$ denotes a layer index, i denotes an index of a spatial domain basis vector, $f$ denotes an index of a frequency domain basis vector, $v$ denotes a total quantity of layers of a target codebook, $N_3$ denotes a total quantity of frequency domain basis vectors in frequency domain, $M_v$ denotes a quantity of frequency domain basis vectors selected and reported by the terminal device, $d$ denotes an index of a time domain basis vector, $n_{3,l}^{(f)}$ denotes a frequency domain basis vector, $n_{4,l}^{(d)}$ denotes a time domain basis vector, D denotes a quantity of time domain basis vectors selected and reported by the terminal device, and $N_4$ denotes a total quantity of time domain basis vectors in time domain.

In some embodiments of this application, a priority of a bitmap (bitmap) corresponding to the weighting coefficients is determined based on at least one of the following:

$L, l, i, f, v, N_3, M_v, d,$ $n_{3,l}^{(f)}, n_{4,l}^{(d)}$, $N_4$, or D,

where $L$ denotes a quantity of spatial domain basis vectors included in a reported target codebook, $l$ denotes a layer index, i denotes an index of a spatial domain basis vector, $f$ denotes an index of a frequency domain basis vector, $v$ denotes a total quantity of layers of a target codebook, $N_3$ denotes a total quantity of frequency domain basis vectors in frequency domain, $M_v$ denotes a quantity of frequency domain basis vectors selected and reported by the terminal device, $d$ denotes an index of a time domain basis vector, $n_{3,l}^{(f)}$ denotes a frequency domain basis vector, $n_{4,l}^{(d)}$ denotes a time domain basis vector, D denotes a quantity of time domain basis vectors selected and reported by the terminal device, and $N_4$ denotes a total quantity of time domain basis vectors in time domain.

In an example, a priority Pri($l, i, f$) of a non-zero coefficient in the weighting coefficients meets the following formula (1):

$$\mathrm{Pri}(l, i, f) = 2 \cdot L \cdot v \cdot N_3 \cdot d + 2 \cdot L \cdot v \cdot \pi(f) + v \cdot i + l \quad (1)$$

where $l$ = 1,2, ..., v, i = 0,1, ...,2L - 1, f = 0,1, ..., $M_v$ - 1, $l$ denotes a layer index, i denotes an index of a spatial domain basis vector, $f$ denotes an index of a frequency domain basis vector, $v$ denotes a total quantity of layers of a target codebook, $L$ denotes a quantity of frequency domain basis vectors included in a reported target codebook, $M_v$ denotes a quantity of frequency domain basis vectors selected and reported by the terminal device, $d$ denotes an index of a time domain basis vector, $N_3$ denotes a total quantity of frequency domain basis vectors in frequency domain, and $\pi(f)$ denotes a priority of a frequency domain basis vector.

In another example, a priority Pri($l, i, f$) of a non-zero coefficient in the weighting coefficients meets the following formula (2):

$$\mathrm{Pri}(l, i, f) = 2 \cdot L \cdot v \cdot M_v \cdot d + 2 \cdot L \cdot v \cdot f + v \cdot i + l \quad (2)$$

where $l$ = 1,2, ..., v, i = 0,1, ...,2L - 1, f = 0,1, ...,$M_v$ - 1, $l$ denotes a layer index, $v$ denotes a total quantity of layers of a target codebook, i denotes an index of a spatial domain basis vector, L denotes a quantity of spatial domain basis vectors included in a reported target codebook, f denotes an index of a frequency domain basis vector, $M_v$ denotes a quantity of frequency domain basis vectors selected and reported by the terminal device, and d denotes an index of a time domain basis vector.

In still another example, a priority Pri($l, i,$ f) of a non-zero coefficient in the weighting coefficients meets the following formula (3):

$$\mathrm{Pri}(l, i, f) = 2 \cdot L \cdot v \cdot M_v \cdot \pi_2(d) + 2 \cdot L \cdot v \cdot f + v \cdot i + l \quad (3)$$

where $l$ = 1,2, ..., v, i = 0,1, ...,2L - 1, f = 0,1, ..., $M_v$ - 1, $l$ denotes a layer index, $v$ denotes a total quantity of layers of a target codebook, i denotes an index of a spatial domain basis vector, L denotes a quantity of spatial domain basis vectors included in a reported target codebook, f denotes an index of a frequency domain basis vector, $M_v$ denotes a quantity of frequency domain basis vectors selected and reported by the terminal device, d denotes an index of a time domain basis vector, and $\pi_2(d)$ denotes a priority of a time domain basis vector.

In still another example, a priority Pri($l, i, f$) of a non-zero coefficient in the weighting coefficient meets the following formula (4):

$$\mathrm{Pri}(l, i, f) = 2 \cdot L \cdot v \cdot N_3 \cdot \pi_2(d) + 2 \cdot L \cdot v \cdot \pi(f) + v \cdot i + l \quad (4)$$

where $l$ = 1,2, ..., v, i = 0,1, ...,2L - 1, f = 0,1, ..., $M_v$ - 1, $l$ denotes a layer index, $v$ denotes a total quantity of layers of target codebooks, i denotes an index of a spatial domain basis vector, L denotes a quantity of spatial domain basis vectors included in a reported target codebook, f denotes an index of a frequency domain basis vector, $M_v$ denotes a quantity of frequency domain basis vectors selected and reported by the terminal device, N3 denotes a total quantity of frequency domain basis vectors in frequency domain, $\pi_2(d)$ denotes a priority of a time domain basis vector, and $\pi(f)$ denotes a priority of a frequency domain basis vector.

Optionally, in the foregoing formula (1) and formula (4), $\pi(f)$ meets the following formula:

$$\pi(f) = \min\left(2 \cdot n_{3,l}^{(f)}, 2 \cdot \left(N_3 - n_{3,l}^{(f)}\right) - 1\right)$$

where min denotes that a minimum value is obtained.

Optionally, in the foregoing formula (3) and formula (4), $\pi_2(d)$ meets the following formula:

$$\pi_2(d) = \min\left(2 \cdot n_{4,l}^{(d)}, 2 \cdot \left(N_4 - n_{4,l}^{(d)}\right) - 1\right),$$

or

$$\pi_2(d) = \min\left(2 \cdot d, 2 \cdot (D - d) - 1\right),$$

where min denotes that a minimum value is obtained, $n_{4,l}^{(d)}$ denotes a time domain basis vector, $N_4$ denotes a total quantity of time domain basis vectors in time domain, d denotes an index of a time domain basis vector, and D denotes a quantity of time domain basis vectors selected and reported by the terminal device.

Optionally, D is predefined or configured by the network device.

In conclusion, in embodiments of this application, the terminal device may report a target codebook to the network device, where the target codebook includes a time domain basis vector, and the time domain basis vector corresponds to $N_4$ first time units, that is, the time domain basis vector may reflect a characteristic of channel information in time domain. Therefore, according to the codebook reporting manner in embodiments of this application, it is beneficial for ensuring that the network device selects a proper precoding matrix for downlink transmission, thereby ensuring downlink transmission performance.

The foregoing describes method embodiments of this application in detail with reference to FIG. 3 to FIG. 5. The following describes apparatus embodiments of this application in detail with reference to FIG. 6 to FIG. 10. It should be understood that the apparatus embodiments correspond to the method embodiments. For similar descriptions, refer to the method embodiments.

FIG. 6 is a schematic block diagram of a terminal device 400 according to an embodiment of this application. As shown in FIG. 6, the terminal device 400 includes:

a communications unit 410, configured to report a target codebook to a network device, where the target codebook is represented by using a spatial domain basis vector, a frequency domain basis vector, a time domain basis vector, and weighting coefficients corresponding to the spatial domain basis vector, the frequency domain basis vector, and the time domain basis vector, the time domain basis vector is a vector whose length is $N_4$, and the vector whose length is $N_4$ corresponds to $N_4$ first time units.

In some embodiments, the $N_4$ is predefined or is determined based on a higher layer parameter.

In some embodiments, the communications unit 410 is further configured to report the $N_4$ to the network device.

In some embodiments, the $N_4$ is reported through part 1 of uplink control information UCI.

In some embodiments, the $N_4$ is selected by the terminal device from K candidate values, where K is a positive integer.

In some embodiments, the $N_4$ is reported by using $\lceil log_2 K \rceil$ bits.

In some embodiments, the $N_4$ is selected by the terminal device from a first value range.

In some embodiments, a maximum value of the first value range is predefined, or is determined based on a higher layer parameter; and/or a minimum value of the first value range is predefined, or is determined based on a higher layer parameter.

In some embodiments, the $N_4$ is reported by using $\lceil log_2\left(N_{4,max} - N_{4,min} + 1\right) \rceil$ bits, where $N_{4,max}$ denotes a maximum value of the first value range, and $N_{4,min}$ denotes a minimum value of the first value range.

In some embodiments, a length of the first time unit is predefined, or is determined based on a higher layer parameter.

In some embodiments, the length of the first time unit is T slots, where T is a positive integer.

In some embodiments, the T slots are consecutive in time domain.

In some embodiments, the T is predefined or is determined based on a higher layer parameter.

In some embodiments, the T is determined based on a subcarrier spacing and a higher layer parameter.

In some embodiments, the T is determined based on a bandwidth part BWP and a higher layer parameter.

In some embodiments, the T is determined based on a subband size and a higher layer parameter.

In some embodiments, the first time unit corresponds to one or more channel state information reference signal CSI-RS transmission occasions of one CSI-RS resource, and a CSI-RS is transmitted in one or more of periodic, quasi periodic, or aperiodic.

In some embodiments, the length of the first time unit is determined based on a reference time length, and the reference time length is a period of a configured CSI-RS resource or an offset between a plurality of CSI-RS resources.

In some embodiments, a minimum value of the length of the first time unit is the reference time length.

In some embodiments, the length of the first time unit is determined based on the reference time length and a higher layer parameter.

In some embodiments, the communications unit 410 is further configured to report a length X of the first time unit to the network device, where X is a positive integer.

In some embodiments, the X is selected from a plurality of candidate values.

In some embodiments, the X is greater than or equal to a candidate value of a period of a CSI-RS associated with the target codebook.

In some embodiments, the time domain basis vector is a discrete Fourier transform DFT vector or a discrete cosine transform DCT vector.

In some embodiments, the communications unit 410 is further configured to report, to the network device, a channel quality indicator CQI corresponding to the target codebook, where the $N_4$ first time units correspond to Y second time units, the second time unit is a time unit of the CQI, and Y is a positive integer.

In some embodiments, consecutive Q first time units correspond to one second time unit, where Q is predefined, or is determined based on a higher layer parameter.

In some embodiments, the communications unit 410 is further configured to report a quantity Y of the second time units to the network device.

In some embodiments, CQIs corresponding to respective time units for each subband are obtained by using wideband CQI differential.

In some embodiments, the $N_4$ first time units correspond to $N_4$ first time units located after a first reference time unit, the first reference time unit is located after a first time and spaced by S reference time units, and a time unit of the reference time unit is the same as a time unit of the first time unit, or a time unit of the reference time unit is a slot.

In some embodiments, the first time is a CSI-RS transmission occasion closest to a CSI reference resource, or the first time is a time at which the terminal device reports the target codebook.

In some embodiments, the S is predefined or is determined based on a higher layer parameter.

In some embodiments, the communications unit 410 is further configured to report a quantity S of the reference time units to the network device.

In some embodiments, the terminal device periodically or quasi-periodically reports the target codebook, where the terminal device occupies a CSI processing unit in a first time period, where

a start time of the first time period is the first CSI-RS transmission occasion of most recent N consecutive CSI-RS transmission occasions that are located before a CSI reference resource, or is the first slot of most recent Y consecutive slots that are located before a CSI reference resource, where N is a positive integer, and Y is a positive integer;

an end time of the first time period is a last symbol of a physical uplink channel that carries the target codebook.

In some embodiments, the terminal device aperiodically reports the target codebook, the terminal device occupies a CSI processing unit in a second time period, and the second time period starts from downlink control information DCI for triggering reporting of the target codebook to a last symbol of a physical uplink channel that carries the target codebook.

In some embodiments, the terminal device reports the target codebook by occupying M CSI processing units, where

M is a quantity of most recent consecutive CSI-RS transmission occasions located before a CSI reference resource; or

M is a quantity of CSI-RS transmission occasions included in a third time period, where the third time period starts from a time at which downlink control information DCI reported in the target codebook is triggered to a CSI reference resource; or

M is $N_4$.

In some embodiments, priorities of an amplitude and a phase of the weighting coefficients are determined based on at least one of the following:

$L$, $l$, $i$, $f$, $v$, $N_3$, $M_v$, $d$, $n_{3,l}^{(f)}$, $n_{4,l}^{(d)}$, $N_4$, or D,

where $L$ denotes a quantity of spatial domain basis vectors included in a reported target codebook, $l$ denotes a layer index, i denotes an index of a spatial domain basis vector, $f$ denotes an index of a frequency domain basis vector, $v$ denotes a total quantity of layers of a target codebook, $N_3$ denotes a total quantity of frequency domain basis vectors in frequency domain, $M_v$ denotes a quantity of frequency domain basis vectors selected and reported by the terminal device, $d$ denotes an index of a time domain basis vector, $n_{3,l}^{(f)}$ denotes a frequency domain basis vector, $n_{4,l}^{(d)}$ denotes a time domain basis vector, D denotes a quantity of time domain basis vectors selected and reported by the terminal device, and $N_4$ denotes a total quantity of time domain basis vectors in time domain.

In some embodiments, a priority of a bitmap (bitmap) corresponding to the weighting coefficients is determined based on at least one of the following:

$L$, $l$, $i$, $f$, $v$, $N_3$, $M_v$, $d$, $n_{3,l}^{(f)}$, $n_{4,l}^{(d)}$, $N_4$, or D,

where $L$ denotes a quantity of spatial domain basis vectors included in a reported target codebook, $l$ denotes a layer index, i denotes an index of a spatial domain basis vector, $f$ denotes an index of a frequency domain basis vector, $v$ denotes a total quantity of layers of a target codebook, $N_3$ denotes a total quantity of frequency domain basis vectors in frequency domain, $M_v$ denotes a quantity of frequency domain basis vectors selected and reported by the terminal device, $d$ denotes an index of a time domain basis vector, $n_{3,l}^{(f)}$ denotes a frequency domain basis vector, $n_{4,l}^{(d)}$ denotes a time domain basis vector, D denotes a quantity of time domain basis vectors selected and reported by the terminal device, and $N_4$ denotes a total quantity of time domain basis vectors in time domain.

In some embodiments, a priority Pri($l$, i, f) of a non-zero coefficient in the weighting coefficients meets the following formula:

$$\mathrm{Pri}(l, i, f) = 2 \cdot L \cdot v \cdot N_3 \cdot d + 2 \cdot L \cdot v \cdot \pi(f) + v \cdot i + l$$

where $l$ = 1,2, ..., v, i = 0,1, ...,2L - 1, f = 0,1, ..., $M_v$ - 1, $l$ denotes a layer index, i denotes an index of a spatial domain basis vector, f denotes an index of a frequency domain basis vector, v denotes a total quantity of layers of a target codebook, $L$ denotes a quantity of spatial domain basis vectors included in a reported target codebook, $M_v$ denotes a quantity of frequency domain basis vectors selected and reported by the terminal device, d denotes an index of a time domain basis vector, $N_3$ denotes a total quantity of frequency domain basis vectors in frequency domain, and $\pi$(f) denotes a priority of a frequency domain basis vector.

In some embodiments, a priority Pri($l$, i, f) of a non-zero coefficient in the weighting coefficients meets the following formula:

$$\mathrm{Pri}(l, i, f) = 2 \cdot L \cdot v \cdot M_v \cdot d + 2 \cdot L \cdot v \cdot f + v \cdot i + l$$

where $l$ = 1,2, ..., v, i = 0,1, ...,2L - 1, and f = 0,1, ..., $M_v$ - 1, $l$ denotes a layer index, v denotes a total quantity of layers of a target codebook, i denotes an index of a spatial domain basis vector, L denotes a quantity of spatial domain basis vectors included in a reported target codebook, f denotes an index of a frequency domain basis vector, and $M_v$ denotes a quantity of frequency domain basis vectors selected and reported by the terminal device.

In some embodiments, a priority Pri($l$, i, f) of a non-zero coefficient in the weighting coefficients meets the following formula:

$$\mathrm{Pri}(l, i, f) = 2 \cdot L \cdot v \cdot M_v \cdot \pi_2(d) + 2 \cdot L \cdot v \cdot f + v \cdot i + l$$

where $l$ = 1,2, ..., v, i = 0,1, ...,2L - 1, f = 0,1, ..., $M_v$ - 1, $l$ denotes a layer index, v denotes a total quantity of layers of a target codebook, i denotes an index of a spatial domain basis vector, L denotes a quantity of spatial domain basis vectors included in a reported target codebook, f denotes an index of a frequency domain basis vector, $M_v$ denotes a quantity of frequency domain basis vectors selected and reported by the terminal device, d denotes an index of a time domain basis vector, and $\pi_2(d)$ denotes a priority of a time domain basis vector.

In some embodiments, a priority of a non-zero coefficient in the weighting coefficients meets the following formula:

$$\mathrm{Pri}(l, i, f) = 2 \cdot L \cdot v \cdot N_3 \cdot \pi_2(d) + 2 \cdot L \cdot v \cdot \pi(f) + v \cdot i + l$$

where $l$ = 1,2, ..., $v$, $i$ = 0,1, ...,2$L$ - 1, $f$ = 0,1, ...,$M_v$ - 1, $l$ denotes a layer index, $v$ denotes a total quantity of layers of target codebooks, $i$ denotes an index of a spatial domain basis vector, $L$ denotes a quantity of spatial domain basis vectors included in a reported target codebook, $f$ denotes an index of a frequency domain basis vector, $M_v$ denotes a quantity of frequency domain basis vectors selected and reported by the terminal device, $N_3$ denotes a total quantity of frequency domain basis vectors in frequency domain, $\pi_2(d)$ denotes a priority of a time domain basis vector, and $\pi(f)$ denotes a priority of a frequency domain basis vector.

In some embodiments, a priority $\pi(f)$ of a frequency domain basis vector meets the following formula:

$$\pi(f) = \min \left( 2 \cdot n_{3,l}^{(f)}, 2 \cdot \left( N_3 - n_{3,l}^{(f)} \right) - 1 \right)$$

where min denotes that a minimum value is obtained, and $n_{3,l}^{(f)}$ denotes a frequency domain basis vector.

In some embodiments, a priority $\pi_2(d)$ of a time domain basis vector meets the following formula:

$$\pi_2(d) = \min \left( 2 \cdot n_{4,l}^{(d)}, 2 \cdot \left( N_4 - n_{4,l}^{(d)} \right) - 1 \right),$$

or

$$\pi_2(d) = \min \left( 2 \cdot d, 2 \cdot (D - d) - 1 \right),$$

where min denotes that a minimum value is obtained, $n_{4,l}^{(d)}$ denotes a time domain basis vector, $N_4$ denotes a total quantity of time domain basis vectors in time domain, $d$ denotes an index of a time domain basis vector, and D denotes a quantity of time domain basis vectors selected and reported by the terminal device.

Optionally, in some embodiments, the communications unit may be a communications interface or a transceiver, or an input/output interface of a communications chip or a system-on-chip. The processing unit may be one or more processors.

It should be understood that the terminal device 400 according to embodiments of this application may correspond to a terminal device in the method embodiments of this application, and the foregoing and other operations and/or functions of units in the terminal device 400 are respectively used to implement corresponding procedures of the terminal device in the method 200 shown in FIG. 3 to FIG. 5. For brevity, details are not described herein again.

FIG. 7 is a schematic block diagram of a network device according to an embodiment of this application. A network device 500 in FIG. 7 includes:

a communications unit 510, configured to receive a target codebook reported by a terminal device, where the target codebook is represented by using a spatial domain basis vector, a frequency domain basis vector, a time domain basis vector, and weighting coefficients corresponding to the spatial domain basis vector, the frequency domain basis vector, and the time domain basis vector, the time domain basis vector is a vector whose length is $N_4$, and the vector whose length is $N_4$ corresponds to $N_4$ first time units.

In some embodiments, the $N_4$ is predefined or is determined based on a higher layer parameter.

In some embodiments, the communications unit 510 is further configured to receive the $N_4$ reported by the terminal device.

In some embodiments, the $N_4$ is reported through part 1 of uplink control information UCI.

In some embodiments, the $N_4$ is selected by the terminal device from K candidate values, where K is a positive integer.

In some embodiments, the $N_4$ is reported by using $\lceil log_2 K \rceil$ bits.

In some embodiments, the $N_4$ is selected by the terminal device from a first value range.

In some embodiments, a maximum value of the first value range is predefined, or is determined based on a higher layer parameter; and/or a minimum value of the first value range is predefined, or is determined based on a higher layer parameter.

In some embodiments, the $N_4$ is reported by using $\lceil log_2 (N_{4,max} - N_{4,min} + 1) \rceil$ bits, where $N_{4,max}$ denotes a maximum value of the first value range, and $N_{4,min}$ denotes a minimum value of the first value range.

In some embodiments, a length of the first time unit is predefined, or is determined based on a higher layer parameter.

In some embodiments, the length of the first time unit is T slots, where T is a positive integer.

In some embodiments, the T slots are consecutive in time domain.

In some embodiments, the T is predefined or is determined based on a higher layer parameter.

In some embodiments, the T is determined based on a subcarrier spacing and a higher layer parameter.

In some embodiments, the T is determined based on a bandwidth part BWP and a higher layer parameter.

In some embodiments, the T is determined based on a subband size and a higher layer parameter.

In some embodiments, the first time unit corresponds to one or more channel state information reference signal CSI-RS transmission occasions of one CSI-RS resource, and a CSI-RS is transmitted in one or more of periodic, quasi periodic, or aperiodic.

In some embodiments, the length of the first time unit is determined based on a reference time length, and the reference time length is a period of a configured CSI-RS resource or an offset between a plurality of CSI-RS resources.

In some embodiments, a minimum value of the length of the first time unit is the reference time length.

In some embodiments, the length of the first time unit is determined based on the reference time length and a higher layer parameter.

In some embodiments, the communications unit 510 is further configured to receive a length X of the first time unit reported by the terminal device, where X is a positive integer.

In some embodiments, the X is selected from a plurality of candidate values.

In some embodiments, the X is greater than or equal to a candidate value of a period of a CSI-RS associated with the target codebook.

In some embodiments, the time domain basis vector is a discrete Fourier transform DFT vector or a discrete cosine transform DCT vector.

In some embodiments, the communications unit 510 is further configured to receive a channel quality indicator CQI corresponding to the target codebook reported by the terminal device, where the $N_4$ first time units correspond to Y second time units, the second time unit is a time unit of the CQI, and Y is a positive integer.

In some embodiments, consecutive Q first time units correspond to one second time unit, where Q is predefined, or is determined based on a higher layer parameter.

In some embodiments, the communications unit 510 is further configured to receive a quantity Y of the second time units reported by the terminal device.

In some embodiments, CQIs corresponding to respective time units for each subband are obtained by using wideband CQI differential.

In some embodiments, the $N_4$ first time units correspond to $N_4$ first time units located after a first reference time unit, the first reference time unit is located after a first time and spaced by S reference time units, and a time unit of the reference time unit is the same as a time unit of the first time unit, or a time unit of the reference time unit is a slot.

In some embodiments, the first time is a CSI-RS transmission occasion closest to a CSI reference resource, or the first time is a time at which the terminal device reports the target codebook.

In some embodiments, the S is predefined or is determined based on a higher layer parameter.

In some embodiments, the communications unit 510 is further configured to receive a quantity S of the reference time units reported by the terminal device.

In some embodiments, priorities of an amplitude and a phase of the weighting coefficients are determined based on at least one of the following:

$L, l, i, f, v, N_3, M_v, d, \ n_{3,l}^{(f)}, \ n_{4,l}^{(d)}, N_4,$ or D,

where $L$ denotes a quantity of spatial domain basis vectors included in a reported target codebook, $l$ denotes a layer index, i denotes an index of a spatial domain basis vector, $f$ denotes an index of a frequency domain basis vector, $v$ denotes a total quantity of layers of a target codebook, $N_3$ denotes a total quantity of frequency domain basis vectors in frequency domain, $M_v$ denotes a quantity of frequency domain basis vectors selected and reported by the terminal device, $d$ denotes an index of a time domain basis vector, $n_{3,l}^{(f)}$ denotes a frequency domain basis vector, $n_{4,l}^{(d)}$ denotes a time domain basis vector, D denotes a quantity of time domain basis vectors selected and reported by the terminal device, and $N_4$ denotes a total quantity of time domain basis vectors in time domain.

In some embodiments, a priority of a bitmap (bitmap) corresponding to the weighting coefficients is determined based on at least one of the following:

$L, l, i, f, v, N_3, M_v, d, \ n_{3,l}^{(f)}, \ n_{4,l}^{(d)}, N_4,$ or D,

where $L$ denotes a quantity of spatial domain basis vectors included in a reported target codebook, $l$ denotes a layer index, i denotes an index of a spatial domain basis vector, $f$ denotes an index of a frequency domain basis vector, $v$ denotes a total quantity of layers of a target codebook, $N_3$ denotes a total quantity of frequency domain basis vectors in frequency domain, $M_v$ denotes a quantity of frequency domain basis vectors selected and reported by the terminal device, $d$ denotes an index of a time domain basis vector, $n_{3,l}^{(f)}$ denotes a frequency domain basis vector, $n_{4,l}^{(d)}$ denotes a time domain basis vector, D denotes a quantity of time domain basis vectors selected and reported by the terminal device, and $N_4$ denotes a total quantity of time domain basis vectors in time domain.

In some embodiments, a priority Pri($l$, $i$, $f$) of a non-zero coefficient in the weighting coefficients meets the following formula:

$$\mathrm{Pri}(l, i, f) = 2 \cdot L \cdot v \cdot N_3 \cdot d + 2 \cdot L \cdot v \cdot \pi(f) + v \cdot i + l$$

where $l$ = 1,2, ..., $v$, $i$ = 0,1, ...,2L - 1, $f$ = 0,1, ..., $M_v$ - 1, $l$ denotes a layer index, i denotes an index of a spatial domain basis vector, $f$ denotes an index of a frequency domain basis vector, $v$ denotes a total quantity of layers of a target codebook, $L$ denotes a quantity of spatial domain basis vectors included in a reported target codebook, $M_v$ denotes a quantity of frequency domain basis vectors selected and reported by the terminal device, $d$ denotes an index of a time domain basis vector, $N_3$ denotes a total quantity of frequency domain basis vectors in frequency domain, and $\pi(f)$ denotes a priority of a frequency domain basis vector.

In some embodiments, a priority Pri($l$, $i$, f) of a non-zero coefficient in the weighting coefficients meets the following formula:

$$\mathrm{Pri}(l, i, f) = 2 \cdot L \cdot v \cdot M_v \cdot d + 2 \cdot L \cdot v \cdot f + v \cdot i + l$$

where $l$ = 1,2, ..., $v$, $i$ = 0,1, ...,2L - 1, and $f$ = 0,1, ..., $M_v$ - 1,
$l$ denotes a layer index, $v$ denotes a total quantity of layers of a target codebook, i denotes an index of a spatial domain basis vector, $L$ denotes a quantity of spatial domain basis vectors included in a reported target codebook, $f$ denotes an index of a frequency domain basis vector, and $M_v$ denotes a quantity of frequency domain basis vectors selected and reported by the terminal device.

In some embodiments, a priority Pri($l$, $i$, $f$) of a non-zero coefficient in the weighting coefficients meets the following formula:

$$\mathrm{Pri}(l, i, f) = 2 \cdot L \cdot v \cdot M_v \cdot \pi_2(d) + 2 \cdot L \cdot v \cdot f + v \cdot i + l$$

where $l$ = 1,2, ..., $v$, $i$ = 0,1, ...,2L - 1, $f$ = 0,1, ..., $M_v$ - 1, $l$ denotes a layer index, $v$ denotes a total quantity of layers of a target codebook, i denotes an index of a spatial domain basis vector, L denotes a quantity of spatial domain basis vectors included in a reported target codebook, f denotes an index of a frequency domain basis vector, $M_v$ denotes a quantity of frequency domain basis vectors selected and reported by the terminal device, d denotes an index of a time domain basis vector, and $\pi_2(d)$ denotes a priority of a time domain basis vector.

In some embodiments, a priority Pri($l$, $i$, f) of a non-zero coefficient in the weighting coefficients meets the following formula:

$$\mathrm{Pri}(l, i, f) = 2 \cdot L \cdot v \cdot N_3 \cdot \pi_2(d) + 2 \cdot L \cdot v \cdot \pi(f) + v \cdot i + l$$

where $l$ = 1,2, ..., $v$, $i$ = 0,1, ...,2L - 1, $f$ = 0,1, ..., $M_v$ - 1, $l$ denotes a layer index, $v$ denotes a total quantity of layers of target codebooks, i denotes an index of a spatial domain basis vector, $L$ denotes a quantity of spatial domain basis vectors included in a reported target codebook, $f$ denotes an index of a frequency domain basis vector, $M_v$ denotes a quantity of frequency domain basis vectors selected and reported by the terminal device, $N_3$ denotes a total quantity of frequency domain basis vectors in frequency domain, $\pi_2(d)$ denotes a priority of a time domain basis vector, and $\pi(f)$ denotes a priority of a frequency domain basis vector.

In some embodiments, a priority $\pi(f)$ of a frequency domain basis vector meets the following formula:

$$\pi(f) = \min\left(2 \cdot n_{3,l}^{(f)}, 2 \cdot \left(N_3 - n_{3,l}^{(f)}\right) - 1\right)$$

where min denotes that a minimum value is obtained, and $n_{3,l}^{(f)}$ denotes a frequency domain basis vector.

In some embodiments, a priority $\pi_2(d)$ of a time domain basis vector meets the following formula:

$$\pi_2(d) = \min\left(2 \cdot n_{4,l}^{(d)}, 2 \cdot \left(N_4 - n_{4,l}^{(d)}\right) - 1\right),$$

or

$$\pi_2(d) = \min\left(2 \cdot d, 2 \cdot (D - d) - 1\right),$$

where min denotes that a minimum value is obtained, $n_{4,l}^{(d)}$ denotes a time domain basis vector, $N_4$ denotes a total quantity of time domain basis vectors in time domain, d denotes an index of a time domain basis vector, and D denotes a quantity of time domain basis vectors selected and reported by the terminal device.

Optionally, in some embodiments, the communications unit may be a communications interface or a transceiver, or an input/output interface of a communications chip or a system-on-chip. The processing unit may be one or more processors.

It should be understood that the network device 500 according to embodiments of this application may correspond to the network device in the method embodiments of this application, and the foregoing and other operations and/or functions of the units in the network device 500 are respectively used to implement a corresponding procedure of the network device in the method 200 shown in FIG. 3 to FIG. 5. For brevity, details are not described herein again.

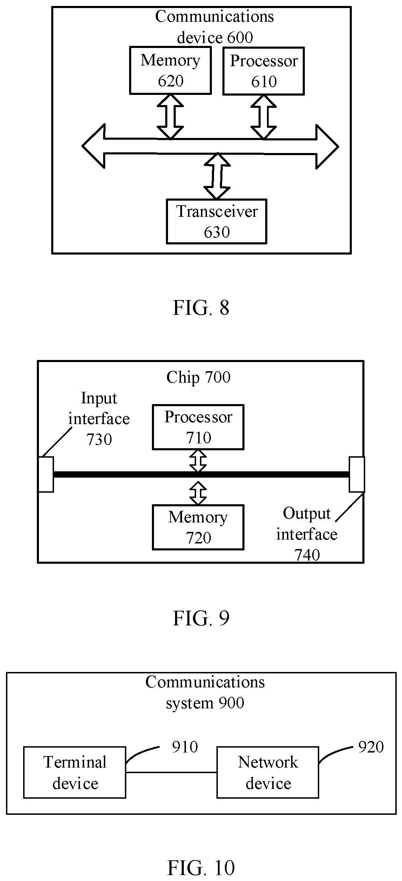

FIG. 8 is a schematic structural diagram of a communications device 600 according to an embodiment of this application. The communications device 600 shown in FIG. 8 includes a processor 610, and the processor 610 may invoke a computer program from a memory and run the computer program to implement a method in embodiments of this application.

As shown in FIG. 8, the communications device 600 may further include a memory 620. The processor 610 may invoke a computer program from the memory 620 and run the computer program to implement a method in embodiments of this application.

The memory 620 may be a separate component independent of the processor 610, or may be integrated into the processor 610.

Optionally, as shown in FIG. 8, the communications device 600 may further include a transceiver 630. The processor 610 may control the transceiver 630 to communicate with another device, and specifically, may transmit information or data to the another device, or receive information or data transmitted by the another device.

The transceiver 630 may include a transmitter and a receiver. The transceiver 630 may further include an antenna, and a quantity of antennas may be one or more.

Optionally, the communications device 600 may be specifically a network device in embodiments of this application, and the communications device 600 may implement corresponding procedures implemented by the network device in methods in embodiments of this application. For brevity, details are not described herein again.

Optionally, the communications device 600 may be specifically a mobile terminal/terminal device in embodiments of this application, and the communications device 600 may implement corresponding procedures implemented by the mobile terminal/the terminal device in methods in embodiments of this application. For brevity, details are not described herein again.

FIG. 9 is a schematic structural diagram of a chip according to an embodiment of this application. The chip 700 shown in FIG. 9 includes a processor 710, and the processor 710 may invoke a computer program from a memory and run the computer program to implement a method in embodiments of this application.

Optionally, as shown in FIG. 9, the chip 700 may further include a memory 720. The processor 710 may invoke a computer program from the memory 720 and run the computer program to implement a method in embodiments of this application.

The memory 720 may be a separate component independent of the processor 710, or may be integrated into the processor 710.

Optionally, the chip 700 may further include an input interface 730. The processor 710 may control the input interface 730 to communicate with another device or chip, and specifically, may obtain information or data transmitted by the another device or chip.

Optionally, the chip 700 may further include an output interface 740. The processor 710 may control the output interface 740 to communicate with another device or chip, and specifically, may output information or data to the another device or chip.

Optionally, the chip may be applied to the network device in embodiments of this application, and the chip may implement corresponding procedures implemented by the network device in methods in embodiments of this application. For brevity, details are not described herein again.

Optionally, the chip may be applied to the mobile terminal/terminal device in embodiments of this application, and the chip may implement corresponding procedures implemented by the mobile terminal/terminal device in methods in embodiments of this application. For brevity, details are not described herein again.

It should be understood that the chip mentioned in this embodiment of this application may alternatively be referred to as a system-level chip, a system chip, a chip system, a system-on-chip, or the like.

FIG. 10 is a schematic block diagram of a communications system 900 according to an embodiment of this application. As shown in FIG. 10, the communications system 900 includes a terminal device 910 and a network device 920.

The terminal device 910 may be used to implement the corresponding functions implemented by the terminal device in the foregoing methods, and the network device 920 may be used to implement the corresponding functions implemented by the network device in the foregoing methods. For brevity, details are not described herein again.

It should be understood that, a processor in embodiments of this application may be an integrated circuit chip having a signal processing capability. In an implementation process, the steps in the foregoing method embodiments may be performed by using an integrated logic circuit of hardware of the processor or instructions in a software form. The processor may be a general-purpose processor, a digital signal processor (Digital Signal Processor, DSP), an application-specific integrated circuit (Application Specific Integrated Circuit, ASIC), a field-programmable gate array (Field Programmable Gate Array, FPGA) or another programmable logic device, a discrete gate or a transistor logic device, or a discrete hardware component. The processor may implement or execute the methods, steps, and logical block diagrams disclosed in embodiments of this application. The general-purpose processor may be a microprocessor, or the processor may be any conventional processor or the like. The steps of the methods disclosed with reference to embodiments of this application may be directly implemented by a hardware decoding processor, or may be implemented by a combination of hardware and software modules in a decoding processor. The software module may be located in a mature storage medium in the art, for example, a random access memory, a flash memory, a read-only memory, a programmable read-only memory, an erasable programmable memory, or a register. The storage medium is located in a memory. The processor reads information from the memory, and completes the steps of the foregoing methods in combination with hardware in the processor.

It may be understood that the memory in embodiments of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that, the memory in the systems and methods described in this specification includes but is not limited to these memories and any memory of another proper type.

It should be understood that, by way of example but not limitative description, for example, the memory in embodiments of this application may alternatively be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synch link DRAM, SLDRAM), a direct rambus random access memory (Direct Rambus RAM, DR RAM), or the like. In other words, the memory in embodiments of this application includes but is not limited to these memories and any memory of another proper type.

An embodiment of this application further provides a computer-readable storage medium, configured to store a computer program.

Optionally, the computer-readable storage medium may be applied to a network device in embodiments of this application, and the computer program causes a computer to execute corresponding procedures implemented by the network device in methods in embodiments of this application. For brevity, details are not described herein again.

Optionally, the computer-readable storage medium may be applied to a mobile terminal/terminal device in embodiments of this application, and the computer program causes a computer to execute corresponding procedures implemented by the mobile terminal/terminal device in methods in embodiments of this application. For brevity, details are not described herein.

An embodiment of this application further provides a computer program product, including computer program instructions.

Optionally, the computer program product may be applied to a network device in embodiments of this application, and the computer program instructions cause a computer to execute corresponding procedures implemented by the network device in methods in embodiments of this application. For brevity, details are not described herein again.

Optionally, the computer program product may be applied to a mobile terminal/terminal device in embodiments of this application, and the computer program instructions cause a computer to execute corresponding procedures implemented by the mobile terminal/terminal device in methods in embodiments of this application. For brevity, details are not described herein again.

An embodiment of this application further provides a computer program.

Optionally, the computer program may be applied to a network device in embodiments of this application. When the computer program runs on a computer, the computer executes corresponding procedures implemented by the network device in methods in embodiments of this application. For brevity, details are not described herein again.

Optionally, the computer program may be applied to a mobile terminal or a terminal device in embodiments of this application. When the computer program runs on a computer, the computer executes corresponding procedures implemented by the mobile terminal or the terminal device in methods in embodiments of this application. For brevity, details are not described herein again.

A person of ordinary skill in the art may be aware that, units and algorithm steps in examples described in combination with embodiments disclosed in this specification can be implemented by electronic hardware or a combination of computer software and electronic hardware. Whether the functions are executed by hardware or software depends on particular applications and design constraints of the technical solutions. A person skilled in the art may use different methods to implement the described functions for each specific application, but it should not be considered that the implementation goes beyond the scope of this application.

It may be clearly understood by those skilled in the art that, for the purpose of convenient and brief description, for a detailed working process of the foregoing system, apparatus, and unit, reference may be made to corresponding processes in the foregoing method embodiments, and details are not described herein again.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and components displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions in this application essentially, or the part contributing to the prior art, or some of the technical solutions may be implemented in a form of a software product. The computer software product is stored in a storage medium and includes several instructions for instructing a computer device (which may be a personal computer, a server, a network device, or the like) to execute all or some of the steps of the methods in embodiments of this application. The foregoing storage medium includes various media that may store a program code, such as a USB flash drive, a removable hard disk, a read-only memory (Read-only Memory, ROM), a random access memory (Random Access Memory, RAM), a magnetic disk, or an optical disk.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application should be subject to the protection scope of the claims.

**Claims**

1. A wireless communication method, comprising:

reporting, by a terminal device, a target codebook to a network device, wherein the target codebook is represented by using a spatial domain basis vector, a frequency domain basis vector, a time domain basis vector, and weighting coefficients corresponding to the spatial domain basis vector, the frequency domain basis vector, and the time domain basis vector, the time domain basis vector is a vector whose length is $N_4$, and the vector whose length is $N_4$ corresponds to $N_4$ first time units.

2. The method according to claim 1, wherein the $N_4$ is predefined or is determined based on a higher layer parameter.

3. The method according to claim 1, wherein the method further comprises:
   reporting, by the terminal device, the $N_4$ to the network device.

4. The method according to claim 3, wherein the $N_4$ is reported through part 1 of uplink control information UCI.

5. The method according to claim 3 or 4, wherein the $N_4$ is selected by the terminal device from K candidate values, and K is a positive integer.

6. The method according to claim 5, wherein the $N_4$ is reported by using $\lceil log_2 K \rceil$ bits.

7. The method according to claim 3 or 4, wherein the $N_4$ is selected by the terminal device from a first value range.

8. The method according to claim 7, wherein

   a maximum value of the first value range is predefined, or is determined based on a higher layer parameter; and/or
   a minimum value of the first value range is predefined, or is determined based on a higher layer parameter.

9. The method according to claim 7 or 8, wherein the $N_4$ is reported by using $\lceil log_2 (N_{4,max} - N_{4,min} + 1) \rceil$ bits, wherein $N_{4,max}$ denotes a maximum value of the first value range, and $N_{4,min}$ denotes a minimum value of the first value range.

10. The method according to any one of claims 1 to 9, wherein a length of the first time unit is predefined, or is determined based on a higher layer parameter.

11. The method according to any one of claims 1 to 10, wherein a length of the first time unit is T slots, and T is a positive integer.

12. The method according to claim 11, wherein the T slots are consecutive in time domain.

13. The method according to claim 11 or 12, wherein the T is predefined or is determined based on a higher layer parameter.

14. The method according to claim 13, wherein the T is determined based on a subcarrier spacing and a higher layer parameter.

15. The method according to claim 13, wherein the T is determined based on a bandwidth part BWP and a higher layer parameter.

16. The method according to claim 13, wherein the T is determined based on a subband size and a higher layer parameter.

17. The method according to any one of claims 1 to 10, wherein the first time unit corresponds to one or more channel state information reference signal CSI-RS transmission occasions of one CSI-RS resource, and a CSI-RS is transmitted in one or more of periodic, quasi periodic, or aperiodic.

18. The method according to any one of claims 1 to 10, wherein a length of the first time unit is determined based on a reference time length, and the reference time length is a period of a configured CSI-RS resource or an offset between a plurality of CSI-RS resources.

**19.** The method according to claim 18, wherein a minimum value of the length of the first time unit is the reference time length.

**20.** The method according to claim 18 or 19, wherein the length of the first time unit is determined based on the reference time length and a higher layer parameter.

**21.** The method according to any one of claims 1 to 20, wherein the method further comprises:
reporting, by the terminal device, a length X of the first time unit to the network device, wherein X is a positive integer.

**22.** The method according to claim 21, wherein the X is selected from a plurality of candidate values.

**23.** The method according to claim 21 or 22, wherein the X is greater than or equal to a candidate value of a period of a CSI-RS associated with the target codebook.

**24.** The method according to any one of claims 1 to 23, wherein the time domain basis vector is a discrete Fourier transform DFT vector or a discrete cosine transform DCT vector.

**25.** The method according to any one of claims 1 to 24, wherein the method further comprises:
reporting, by the terminal device to the network device, a channel quality indicator CQI corresponding to the target codebook, wherein the $N_4$ first time units correspond to Y second time units, the second time unit is a time unit of the CQI, and Y is a positive integer.

**26.** The method according to claim 25, wherein consecutive Q first time units correspond to one second time unit, and Q is predefined or is determined based on a higher layer parameter.

**27.** The method according to claim 25 or 26, wherein the method further comprises:
reporting, by the terminal device, a quantity Y of the second time units to the network device.

**28.** The method according to any one of claims 25 to 27, wherein CQIs corresponding to respective time units for each subband are obtained by using wideband CQI differential.

**29.** The method according to any one of claims 1 to 28, wherein the $N_4$ first time units correspond to $N_4$ first time units located after a first reference time unit, the first reference time unit is located after a first time and spaced by S reference time units, and a time unit of the reference time unit is the same as a time unit of the first time unit, or a time unit of the reference time unit is a slot.

**30.** The method according to claim 29, wherein

the first time is a CSI-RS transmission occasion closest to a CSI reference resource; or
the first time is a time at which the terminal device reports the target codebook.

**31.** The method according to claim 29 or 30, wherein S is predefined or is determined based on a higher layer parameter.

**32.** The method according to claim 29 or 30, wherein the method further comprises:
reporting, by the terminal device, a quantity S of the reference time units to the network device.

**33.** The method according to any one of claims 1 to 32, wherein the terminal device periodically or quasi-periodically reports the target codebook, and the terminal device occupies a CSI processing unit in a first time period, wherein

a start time of the first time period is the first CSI-RS transmission occasion of most recent N consecutive CSI-RS transmission occasions that are located before a CSI reference resource, or is the first slot of most recent Y consecutive slots that are located before a CSI reference resource, wherein N is a positive integer, and Y is a positive integer; and
an end time of the first time period is a last symbol of a physical uplink channel that carries the target codebook.

**34.** The method according to any one of claims 1 to 32, wherein the terminal device aperiodically reports the target codebook, the terminal device occupies a CSI processing unit in a second time period, and the second time period starts from downlink control information DCI for triggering reporting of the target codebook to a last symbol of a physical uplink channel that carries the target codebook.

35. The method according to any one of claims 1 to 34, wherein the terminal device reports the target codebook by occupying M CSI processing units, wherein

   M is a quantity of most recent consecutive CSI-RS transmission occasions located before a CSI reference resource; or
   M is a quantity of CSI-RS transmission occasions comprised in a third time period, wherein the third time period starts from downlink control information DCI for triggering reporting of the target codebook to a CSI reference resource; or
   M is $N_4$.

36. The method according to any one of claims 1 to 35, wherein priorities of an amplitude and a phase of the weighting coefficients are determined based on at least one of following:

   $L$, $l$, $i$, $f$, $v$, $N_3$, $M_v$, $d$, $n_{4,l}^{(d)}$, $N_4$, or D,
   wherein $L$ denotes a quantity of spatial domain basis vectors comprised in a reported target codebook, $l$ denotes a layer index, i denotes an index of a spatial domain basis vector, $f$ denotes an index of a frequency domain basis vector, $v$ denotes a total quantity of layers of the target codebook, $N_3$ denotes a total quantity of frequency domain basis vectors in frequency domain, $M_v$ denotes a quantity of frequency domain basis vectors selected and reported by the terminal device, $d$ denotes an index of a time domain basis vector, $n_{3,l}^{(f)}$ denotes a frequency domain basis vector, $n_{4,l}^{(d)}$ denotes a time domain basis vector, D denotes a quantity of time domain basis vectors selected and reported by the terminal device, and $N_4$ denotes a total quantity of time domain basis vectors in time domain.

37. The method according to any one of claims 1 to 36, wherein a priority of a bitmap corresponding to the weighting coefficients is determined based on at least one of following:

   $L$, $l$, $i$, $f$, $v$, $N_3$, $M_v$, $d$, $n_{4,l}^{(d)}$, $N_4$, or D,
   wherein L denotes a quantity of spatial domain basis vectors comprised in a reported target codebook, $l$ denotes a layer index, i denotes an index of a spatial domain basis vector, $f$ denotes an index of a frequency domain basis vector, $v$ denotes a total quantity of layers of a target codebook, $N_3$ denotes a total quantity of frequency domain basis vectors in frequency domain, $M_v$ denotes a quantity of frequency domain basis vectors selected and reported by the terminal device, d denotes an index of a time domain basis vector, $n_{3,l}^{(f)}$ denotes a frequency domain basis vector, $n_{4,l}^{(d)}$ denotes a time domain basis vector, D denotes a quantity of time domain basis vectors selected and reported by the terminal device, and $N_4$ denotes a total quantity of time domain basis vectors in time domain.

38. The method according to any one of claims 1 to 37, wherein a priority Pri($l$, $i$, $f$) of a non-zero coefficient in the weighting coefficients meets following formula:

$$\mathrm{Pri}(l, i, f) = 2 \cdot L \cdot v \cdot N_3 \cdot d + 2 \cdot L \cdot v \cdot \pi(f) + v \cdot i + l$$

   wherein $l$ = 1,2, ..., v, i = 0,1, ...,2L - 1, f = 0,1, ..., $M_v$ - 1, l denotes a layer index, i denotes an index of a spatial domain basis vector, f denotes an index of a frequency domain basis vector, v denotes a total quantity of layers of a target codebook, L denotes a quantity of spatial domain basis vectors comprised in a reported target codebook, $M_v$ denotes a quantity of frequency domain basis vectors selected and reported by the terminal device, d denotes an index of a time domain basis vector, $N_3$ denotes a total quantity of frequency domain basis vectors in frequency domain, and $\pi(f)$ denotes a priority of a frequency domain basis vector.

39. The method according to any one of claims 1 to 37, wherein a priority Pri($l$, i, f) of a non-zero coefficient in the weighting coefficients meets following formula:

$$\mathrm{Pri}(l, i, f) = 2 \cdot L \cdot v \cdot M_v \cdot d + 2 \cdot L \cdot v \cdot f + v \cdot i + l$$

wherein $l$ = 1,2, ..., $v$, $i$ = 0,1, ...,2$L$ - 1, and $f$ = 0,1, ..., $M_v$ - 1,

$l$ denotes a layer index, $v$ denotes a total quantity of layers of a target codebook, i denotes an index of a spatial domain basis vector, $L$ denotes a quantity of spatial domain basis vectors comprised in a reported target codebook, $f$ denotes an index of a frequency domain basis vector, $M_v$ denotes a quantity of frequency domain basis vectors selected and reported by the terminal device, and $d$ denotes an index of a time domain basis vector.

40. The method according to any one of claims 1 to 37, wherein a priority Pri($l, i, f$) of a non-zero coefficient in the weighting coefficients meets following formula:

$$\mathrm{Pri}(l, i, f) = 2 \cdot L \cdot v \cdot M_v \cdot \pi_2(d) + 2 \cdot L \cdot v \cdot f + v \cdot i + l$$

wherein $l$ = 1,2, ..., $v$, $i$ = 0,1, ...,2$L$ - 1, $f$ = 0,1, ..., $M_v$ - 1, $l$ denotes a layer index, $v$ denotes a total quantity of layers of a target codebook, i denotes an index of a spatial domain basis vector, $L$ denotes a quantity of spatial domain basis vectors comprised in a reported target codebook, $f$ denotes an index of a frequency domain basis vector, $M_v$ denotes a quantity of frequency domain basis vectors selected and reported by the terminal device, $d$ denotes an index of a time domain basis vector, and $\pi_2(d)$ denotes a priority of a time domain basis vector.

41. The method according to any one of claims 1 to 37, wherein a priority Pri($l, i, f$) of a non-zero coefficient in the weighting coefficients meets following formula:

$$\mathrm{Pri}(l, i, f) = 2 \cdot L \cdot v \cdot N_3 \cdot \pi_2(d) + 2 \cdot L \cdot v \cdot \pi(f) + v \cdot i + l$$

wherein $l$ = 1,2, ..., $v$, $i$ = 0,1, ...,2$L$ - 1, $f$ = 0,1, ..., $M_v$ - 1, $l$ denotes a layer index, $v$ denotes a total quantity of layers of target codebooks, i denotes an index of a spatial domain basis vector, $L$ denotes a quantity of spatial domain basis vectors comprised in a reported target codebook, $f$ denotes an index of a frequency domain basis vector, $M_v$ denotes a quantity of frequency domain basis vectors selected and reported by the terminal device, $N_3$ denotes a total quantity of frequency domain basis vectors in frequency domain, d denotes an index of a time domain basis vector, $\pi_2(d)$ denotes a priority of a time domain basis vector, and $\pi(f)$ denotes a priority of a frequency domain basis vector.

42. The method according to claim 38 or 41, wherein the priority $\pi(f)$ of the frequency domain basis vector meets following formula:

$$\pi(f) = \min \left( 2 \cdot n_{3,l}^{(f)}, 2 \cdot \left( N_3 - n_{3,l}^{(f)} \right) - 1 \right)$$

wherein min denotes that a minimum value is obtained, and $n_{3,l}^{(f)}$ denotes a frequency domain basis vector.

43. The method according to claim 40 or 41, wherein the priority $\pi_2(d)$ of the time domain basis vector meets following formula:

$$\pi_2(d) = \min \left( 2 \cdot n_{4,l}^{(d)}, 2 \cdot \left( N_4 - n_{4,l}^{(d)} \right) - 1 \right)$$

or

$$\pi_2(d) = \min \left( 2 \cdot d, 2 \cdot (D - d) - 1 \right),$$

wherein min denotes that a minimum value is obtained, $n_{4,l}^{(d)}$ denotes a time domain basis vector, $N_4$ denotes a total quantity of time domain basis vectors in time domain, d denotes an index of a time domain basis vector, and D denotes a quantity of time domain basis vectors selected and reported by the terminal device.

44. A wireless communication method, comprising:

receiving, by a network device, a target codebook reported by a terminal device, wherein the target codebook is represented by using a spatial domain basis vector, a frequency domain basis vector, a time domain basis vector, and weighting coefficients corresponding to the spatial domain basis vector, the frequency domain basis vector, and the time domain basis vector, the time domain basis vector is a vector whose length is $N_4$, and the vector whose length is $N_4$ corresponds to $N_4$ first time units.

**45.** The method according to claim 44, wherein the $N_4$ is predefined or is determined based on a higher layer parameter.

**46.** The method according to claim 44, wherein the method further comprises:
receiving, by the network device, the $N_4$ reported by the terminal device.

**47.** The method according to claim 46, wherein the $N_4$ is reported through part 1 of uplink control information UCI.

**48.** The method according to claim 46 or 47, wherein the $N_4$ is selected by the terminal device from K candidate values, and K is a positive integer.

**49.** The method according to claim 48, wherein the $N_4$ is reported by using $\lceil log_2 K \rceil$ bits.

**50.** The method according to claim 46 or 47, wherein the $N_4$ is selected by the terminal device from a first value range.

**51.** The method according to claim 50, wherein

a maximum value of the first value range is predefined, or is determined based on a higher layer parameter; and/or
a minimum value of the first value range is predefined, or is determined based on a higher layer parameter.

**52.** The method according to claim 50 or 51, wherein the $N_4$ is reported by using $\lceil \log_2(N_{4,max} - N_{4,min} + 1) \rceil$ bits, wherein $N_{4,max}$ denotes a maximum value of the first value range, and $N_{4,min}$ denotes a minimum value of the first value range.

**53.** The method according to any one of claims 44 to 52, wherein a length of the first time unit is predefined, or is determined based on a higher layer parameter.

**54.** The method according to any one of claims 44 to 53, wherein a length of the first time unit is T slots, and T is a positive integer.

**55.** The method according to claim 54, wherein the T slots are consecutive in time domain.

**56.** The method according to claim 54 or 55, wherein the T is predefined or is determined based on a higher layer parameter.

**57.** The method according to claim 56, wherein the T is determined based on a subcarrier spacing and a higher layer parameter.

**58.** The method according to claim 56, wherein the T is determined based on a bandwidth part BWP and a higher layer parameter.

**59.** The method according to claim 56, wherein the T is determined based on a subband size and a higher layer parameter.

**60.** The method according to any one of claims 44 to 53, wherein the first time unit corresponds to one or more channel state information reference signal CSI-RS transmission occasions of one CSI-RS resource, and a CSI-RS is transmitted in one or more of periodic, quasi periodic, or aperiodic.

**61.** The method according to any one of claims 44 to 53, wherein a length of the first time unit is determined based on a reference time length, and the reference time length is a period of a configured CSI-RS resource or an offset between a plurality of CSI-RS resources.

62. The method according to claim 61, wherein a minimum value of the length of the first time unit is the reference time length.

63. The method according to claim 61 or 62, wherein the length of the first time unit is determined based on the reference time length and a higher layer parameter.

64. The method according to any one of claims 44 to 63, wherein the method further comprises:
receiving, by the network device, a length X of the first time unit reported by the terminal device, wherein X is a positive integer.

65. The method according to claim 64, wherein the X is selected from a plurality of candidate values.

66. The method according to claim 64 or 65, wherein the X is greater than or equal to a candidate value of a period of a CSI-RS associated with the target codebook.

67. The method according to any one of claims 44 to 66, wherein the time domain basis vector is a discrete Fourier transform DFT vector or a discrete cosine transform DCT vector.

68. The method according to any one of claims 44 to 67, wherein the method further comprises:
receiving, by the network device, a channel quality indicator CQI corresponding to the target codebook reported by the terminal device, wherein the $N_4$ first time units correspond to Y second time units, the second time unit is a time unit of the CQI, and Y is a positive integer.

69. The method according to claim 68, wherein consecutive Q first time units correspond to one second time unit, and Q is predefined or is determined based on a higher layer parameter.

70. The method according to claim 68 or 69, wherein the method further comprises:
receiving, by the network device, a quantity Y of the second time units reported by the terminal device.

71. The method according to any one of claims 68 to 70, wherein CQIs corresponding to respective time units for each subband are obtained by using wideband CQI differential.

72. The method according to any one of claims 44 to 71, wherein the $N_4$ first time units correspond to $N_4$ first time units located after a first reference time unit, the first reference time unit is located after a first time and spaced by S reference time units, and a time unit of the reference time unit is the same as a time unit of the first time unit, or a time unit of the reference time unit is a slot.

73. The method according to claim 72, wherein

the first time is a CSI-RS transmission occasion closest to a CSI reference resource; or
the first time is a time at which the terminal device reports the target codebook.

74. The method according to claim 72 or 73, wherein S is predefined or is determined based on a higher layer parameter.

75. The method according to claim 72 or 73, wherein the method further comprises:
receiving, by the network device, a quantity S of the reference time units reported by the terminal device.

76. The method according to any one of claims 44 to 75, wherein priorities of an amplitude and a phase of the weighting coefficients are determined based on at least one of following:

$L,\ l,\ i,\ f,\ v,\ N_3,\ M_v,\ d,\ n_{3,l}^{(f)},\ n_{4,l}^{(d)}$, $N_4$, or D,

wherein L denotes a quantity of spatial domain basis vectors comprised in a reported target codebook, $l$ denotes a layer index, i denotes an index of a spatial domain basis vector, $f$ denotes an index of a frequency domain basis vector, v denotes a total quantity of layers of a target codebook, $N_3$ denotes a total quantity of frequency domain basis vectors in frequency domain, $M_v$ denotes a quantity of frequency domain basis vectors selected and reported by the terminal device, d denotes an index of a time domain basis vector, $n_{3,l}^{(f)}$ denotes a frequency domain basis vector, $n_{4,l}^{(d)}$

denotes a time domain basis vector, D denotes a quantity of time domain basis vectors selected and reported by the terminal device, and $N_4$ denotes a total quantity of time domain basis vectors in time domain.

77. The method according to any one of claims 44 to 76, wherein a priority of a bitmap corresponding to the weighting coefficients is determined based on at least one of following:

$L$, $l$, $i$, $f$, $v$, $N_3$, $M_v$, $d$, $n_{3,l}^{(f)}$, $n_{4,l}^{(d)}$, $N_4$, or D,

wherein L denotes a quantity of spatial domain basis vectors comprised in a reported target codebook, $l$ denotes a layer index, i denotes an index of a spatial domain basis vector, $f$ denotes an index of a frequency domain basis vector, $v$ denotes a total quantity of layers of a target codebook, $N_3$ denotes a total quantity of frequency domain basis vectors in frequency domain, $M_v$ denotes a quantity of frequency domain basis vectors selected and reported by the terminal device, d denotes an index of a time domain basis vector, $n_{3,l}^{(f)}$ denotes a frequency domain basis vector, $n_{4,l}^{(d)}$ denotes a time domain basis vector, D denotes a quantity of time domain basis vectors selected and reported by the terminal device, and $N_4$ denotes a total quantity of time domain basis vectors in time domain.

78. The method according to any one of claims 44 to 77, wherein a priority Pri($l$, $i$, $f$) of a non-zero coefficient in the weighting coefficients meets following formula:

$$\text{Pri}(l, i, f) = 2 \cdot L \cdot v \cdot N_3 \cdot d + 2 \cdot L \cdot v \cdot \pi(f) + v \cdot i + l$$

wherein $l$ = 1,2, ..., $v$, $i$ = 0,1, ...,2L - 1, $f$ = 0,1, ..., $M_v$ - 1, $l$ denotes a layer index, i denotes an index of a spatial domain basis vector, f denotes an index of a frequency domain basis vector, $v$ denotes a total quantity of layers of a target codebook, L denotes a quantity of spatial domain basis vectors comprised in a reported target codebook, $M_v$ denotes a quantity of frequency domain basis vectors selected and reported by the terminal device, d denotes an index of a time domain basis vector, $N_3$ denotes a total quantity of frequency domain basis vectors in frequency domain, and $\pi(f)$ denotes a priority of a frequency domain basis vector.

79. The method according to any one of claims 44 to 77, wherein a priority Pri($l$, $i$, $f$) of a non-zero coefficient in the weighting coefficients meets following formula:

$$\text{Pri}(l, i, f) = 2 \cdot L \cdot v \cdot M_v \cdot d + 2 \cdot L \cdot v \cdot f + v \cdot i + l$$

wherein $l$ = 1,2, ..., $v$, $i$ = 0,1, ...,2L - 1, and $f$ = 0,1, ..., $M_v$ - 1,
$l$ denotes a layer index, $v$ denotes a total quantity of layers of a target codebook, i denotes an index of a spatial domain basis vector, L denotes a quantity of spatial domain basis vectors comprised in a reported target codebook, f denotes an index of a frequency domain basis vector, $M_v$ denotes a quantity of frequency domain basis vectors selected and reported by the terminal device.

80. The method according to any one of claims 44 to 77, wherein a priority Pri($l$, $i$, $f$) of a non-zero coefficient in the weighting coefficients meets following formula:

$$\text{Pri}(l, i, f) = 2 \cdot L \cdot v \cdot M_v \cdot \pi_2(d) + 2 \cdot L \cdot v \cdot f + v \cdot i + l$$

wherein $l$ = 1,2, ..., $v$, $i$ = 0,1, ...,2L - 1, $f$ = 0,1, ..., $M_v$ - 1, $l$ denotes a layer index, $v$ denotes a total quantity of layers of a target codebook, i denotes an index of a spatial domain basis vector, L denotes a quantity of spatial domain basis vectors comprised in a reported target codebook, f denotes an index of a frequency domain basis vector, $M_v$ denotes a quantity of frequency domain basis vectors selected and reported by the terminal device, d denotes an index of a time domain basis vector, and $\pi_2(d)$ denotes a priority of a time domain basis vector.

81. The method according to any one of claims 44 to 77, wherein a priority Pri($l$, $i$, $f$) of a non-zero coefficient in the weighting coefficients meets following formula:

$$\text{Pri}(l, i, f) = 2 \cdot L \cdot v \cdot N_3 \cdot \pi_2(d) + 2 \cdot L \cdot v \cdot \pi(f) + v \cdot i + l$$

wherein $l = 1,2, ..., v, i = 0,1, ...,2L - 1, f = 0,1, ..., M_v - 1$, $l$ denotes a layer index, $v$ denotes a total quantity of layers of target codebooks, i denotes an index of a spatial domain basis vector, $L$ denotes a quantity of spatial domain basis vectors comprised in a reported target codebook, $f$ denotes an index of a frequency domain basis vector, $M_v$ denotes a quantity of frequency domain basis vectors selected and reported by the terminal device, $N_3$ denotes a total quantity of frequency domain basis vectors in frequency domain, $\pi_2(d)$ denotes a priority of a time domain basis vector, and $\pi(f)$ denotes a priority of a frequency domain basis vector.

82. The method according to claim 78 or 81, wherein the priority $\pi(f)$ of the frequency domain basis vector meets following formula:

$$\pi(f) = \min\left(2 \cdot n_{3,l}^{(f)}, 2 \cdot \left(N_3 - n_{3,l}^{(f)}\right) - 1\right)$$

wherein min denotes that a minimum value is obtained, and $n_{3,l}^{(f)}$ denotes a frequency domain basis vector.

83. The method according to claim 80 or 81, wherein the priority $\pi_2(d)$ of the time domain basis vector meets following formula:

$$\pi_2(d) = \min\left(2 \cdot n_{4,l}^{(d)}, 2 \cdot \left(N_4 - n_{4,l}^{(d)}\right) - 1\right)$$

or

$$\pi_2(d) = \min\left(2 \cdot d, 2 \cdot (D - d) - 1\right),$$

wherein min denotes that a minimum value is obtained, $n_{4,l}^{(d)}$ denotes a time domain basis vector, $N_4$ denotes a total quantity of time domain basis vectors in time domain, $d$ denotes an index of a time domain basis vector, and D denotes a quantity of time domain basis vectors selected and reported by the terminal device.

84. A terminal device, comprising:
a communications unit, configured to report a target codebook to a network device, wherein the target codebook is represented by using a spatial domain basis vector, a frequency domain basis vector, a time domain basis vector, and weighting coefficients corresponding to the spatial domain basis vector, the frequency domain basis vector, and the time domain basis vector, the time domain basis vector is a vector whose length is $N_4$, and the vector whose length is $N_4$ corresponds to $N_4$ first time units.

85. A network device, comprising:
a communications unit, configured to receive a target codebook reported by a terminal device, wherein the target codebook is represented by using a spatial domain basis vector, a frequency domain basis vector, a time domain basis vector, and weighting coefficients corresponding to the spatial domain basis vector, the frequency domain basis vector, and the time domain basis vector, the time domain basis vector is a vector whose length is $N_4$, and the vector whose length is $N_4$ corresponds to $N_4$ first time units.

86. A terminal device, comprising a processor and a memory, wherein the memory is configured to store a computer program, and the processor is configured to invoke and run the computer program stored in the memory to execute the method according to any one of claims 1 to 43.

87. A network device, comprising a processor and a memory, wherein the memory is configured to store a computer program, and the processor is configured to invoke and run the computer program stored in the memory to execute the method according to any one of claims 44 to 83.

88. A chip, comprising a processor, configured to invoke a computer program from a memory and run the computer program, to cause a device installed with the chip to execute the method according to any one of claims 1 to 43 or the method according to any one of claims 44 to 83.

89. A computer-readable storage medium, configured to store a computer program, wherein the computer program causes a computer to execute the method according to any one of claims 1 to 43 or the method according to any one of claims 44 to 83.

90. A computer program product, comprising computer program instructions, wherein the computer program instructions cause a computer to execute the method according to any one of claims 1 to 43 or the method according to any one of claims 44 to 83.

91. A computer program, wherein the computer program causes a computer to execute the method according to any one of claims 1 to 43 or the method according to any one of claims 44 to 83.

FIG. 1

FIG. 2

| Terminal device | | Network device |
|---|---|---|

S210. A target codebook, where the target codebook is represented by using a spatial domain basis vector, a frequency domain basis vector, a time domain basis vector, and weighting coefficients corresponding to the spatial domain basis vector, the frequency domain basis vector, and the time domain basis vector, the time domain basis vector is a vector whose length is $N_4$, and the vector whose length is $N_4$ corresponds to $N_4$ first time units

FIG. 3

S reference time units

Report a codebook

| CSI-RS transmission occasion | ... | CSI-RS transmission occasion | CSI Reference resource | | W_1 | W_2 | ... | W_N4 |
|---|---|---|---|---|---|---|---|---|

First time

First reference time unit

First time unit

FIG. 4

S reference
time units

Report a
codebook

| CSI-RS transmission occasion | ... | CSI-RS transmission occasion | CSI Reference resource | | | W_1 | W_2 | ... | W_N4 |

First
time

First
reference
time unit

First
time unit

**FIG. 5**

Terminal device
400

Communications unit
410

**FIG. 6**

Network device
500

Communications unit
510

**FIG. 7**

Communications
device 600

Memory
620

Processor
610

Transceiver
630

FIG. 8

Chip 700

Input
interface
730

Processor
710

Memory
720

Output
interface
740

FIG. 9

Communications
system 900

Terminal
device

910

Network
device

920

FIG. 10

## INTERNATIONAL SEARCH REPORT

| International application No. |
| --- |
| **PCT/CN2022/128063** |

| A. | CLASSIFICATION OF SUBJECT MATTER |
| --- | --- |

H04B7/0417(2017.01)i;  H04B7/0456(2017.01)i

According to International Patent Classification (IPC) or to both national classification and IPC

| B. | FIELDS SEARCHED |
| --- | --- |

Minimum documentation searched (classification system followed by classification symbols)

   IPC: H04B H04W

Documentation searched other than minimum documentation to the extent that such documents are included in the fields searched

Electronic data base consulted during the international search (name of data base and, where practicable, search terms used)

   CNTXT, CNKI, ENTXT, ENTXTC, 3GPP: 多普勒基向量, 时域基向量, 时域, 时频, 码本, PMI, 长度, 单元, time 2d vector, doppler 2d vector, unit?, length, code, time, vector

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 111510189 A (HUAWEI TECHNOLOGIES CO., LTD.) 07 August 2020 (2020-08-07) description, paragraphs 0002-0249 | 1-24, 44-67, 84-91 |
| X | CN 113840324 A (HUAWEI TECHNOLOGIES CO., LTD.) 24 December 2021 (2021-12-24) description, paragraphs 0002-0058 | 1-24, 44-67, 84-91 |
| X | CN 113965232 A (HUAWEI TECHNOLOGIES CO., LTD.) 21 January 2022 (2022-01-21) description, paragraphs 0002-0045 | 1-24, 44-67, 84-91 |
| X | WO 2020156103 A1 (HUAWEI TECHNOLOGIES CO., LTD.) 06 August 2020 (2020-08-06) description, page 1, paragraph 3-page 5, paragraph 4 | 1-24, 44-67, 84-91 |
| A | CN 110768700 A (HUAWEI TECHNOLOGIES CO., LTD.) 07 February 2020 (2020-02-07) entire document | 1-91 |
| A | CN 111769857 A (HUAWEI TECHNOLOGIES CO., LTD.) 13 October 2020 (2020-10-13) entire document | 1-91 |
| A | CN 114342517 A (GUANGDONG OPPO MOBILE TELECOMMUNICATIONS CORP., LTD.) 12 April 2022 (2022-04-12) entire document | 1-91 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **21 June 2023** | **21 June 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2022/128063** |

**C.   DOCUMENTS CONSIDERED TO BE RELEVANT**

| Category* | Citation of document, with indication, where appropriate, of the relevant passages | Relevant to claim No. |
| --- | --- | --- |
| A | WO 2022141106 A1 (GUANGDONG OPPO MOBILE TELECOMMUNICATIONS CORP., LTD.) 07 July 2022 (2022-07-07) entire document | 1-91 |

Form PCT/ISA/210 (second sheet) (July 2022)

**INTERNATIONAL SEARCH REPORT**
Information on patent family members

International application No.

**PCT/CN2022/128063**

| Patent document cited in search report | | | Publication date (day/month/year) | Patent family member(s) | | | Publication date (day/month/year) |
|---|---|---|---|---|---|---|---|
| CN | 111510189 | A | 07 August 2020 | WO | 2020156103 | A1 | 06 August 2020 |
| CN | 113840324 | A | 24 December 2021 | None | | | |
| CN | 113965232 | A | 21 January 2022 | None | | | |
| WO | 2020156103 | A1 | 06 August 2020 | None | | | |
| CN | 110768700 | A | 07 February 2020 | EP | 3820095 | A1 | 12 May 2021 |
| | | | | EP | 3820095 | A4 | 11 August 2021 |
| | | | | US | 2021175936 | A1 | 10 June 2021 |
| | | | | US | 11431384 | B2 | 30 August 2022 |
| | | | | US | 2022385339 | A1 | 01 December 2022 |
| | | | | WO | 2020020017 | A1 | 30 January 2020 |
| CN | 111769857 | A | 13 October 2020 | None | | | |
| CN | 114342517 | A | 12 April 2022 | None | | | |
| WO | 2022141106 | A1 | 07 July 2022 | None | | | |

Form PCT/ISA/210 (patent family annex) (July 2022)